(19) Europäisches Patentamt
European Patent Office
Office européen des brevets

(11) Veröffentlichungsnummer : **0 142 019**
**B1**

(12) # EUROPÄISCHE PATENTSCHRIFT

(45) Veröffentlichungstag der Patentschrift : **30.12.86**

(51) Int. Cl.⁴ : **C 09 B 56/02**, D 06 P 3/85, D 06 P 3/52, D 06 P 3/60

(21) Anmeldenummer : **84112076.9**

(22) Anmeldetag : **09.10.84**

(54) **Azogruppenhaltige Metallkomplexfarbstoffe.**

(30) Priorität : **15.10.83 DE 3337591**

(43) Veröffentlichungstag der Anmeldung : **22.05.85 Patentblatt 85/21**

(45) Bekanntmachung des Hinweises auf die Patenterteilung : **30.12.86 Patentblatt 86/52**

(84) Benannte Vertragsstaaten : **CH DE FR GB IT LI**

(56) Entgegenhaltungen : **US-A- 3 389 132**

(73) Patentinhaber : **BASF Aktiengesellschaft**
**Carl-Bosch-Strasse 38**
**D-6700 Ludwigshafen (DE)**

(72) Erfinder : **Dehnert, Johannes, Dr.**
**Ottweilerstrasse 2**
**D-6700 Ludwigshafen (DE)**
Erfinder : **Juenemann, Werner, Dr.**
**Haidfeldweg 1c**
**D-6702 Bad Duerkheim (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 142 019 B1

Jouve, 18, rue St-Denis, 75001 Paris, France

**Beschreibung**

Die Erfindung betrifft Farbstoffverbindungen der allgemeinen Formel I

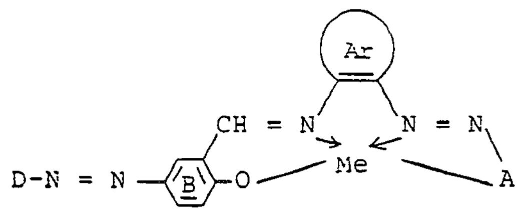

(I)

in der

A der Rest einer gegebenenfalls nach Umwandlung zur Komplexbildung befähigten Kupplungs- oder Diazokomponente,

Ar ein gegebenenfalls substituierter aromatischer oder heterocyclischer Rest,

D der Rest einer Diazokomponente und

Me ein $Co^{2+}$-, $Cu^{2+}$-, $Zn^{2+}$-, $Mn^{2+}$- oder $Ni^{2+}$-Atom sind und

wobei der Ring B noch substituiert sein kann.

Die Reste A entsprechen z. B. den Formeln

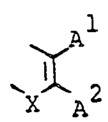

,

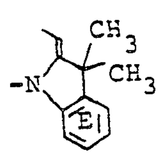

oder

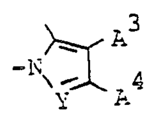

in denen

$A^1$ Alkanoyl, gegebenenfalls substituiertes Benzoyl oder gegebenenfalls substituiertes Alkyl- oder Arylaminocarbonyl,

$A^2$ Alkyl oder Aryl,

$A^1$ und

$A^2$ zusammen der Rest eines gegebenenfalls substituierten aliphatischen, aromatischen oder heterocyclischen Ringsystems,

$A^3$ Wasserstoff oder Alkyl,

$A^4$ Wasserstoff, Alkoxycarbonyl, Alkyl oder Aryl,

$A^3$ und

$A^4$ zusammen Tetramethylen oder die Ergänzung zu einem gegebenenfalls substituierten Benzring,

X —O— oder

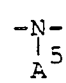

und

Y —N= oder

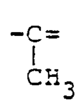

sind,

wobei der Ring E noch durch Chlor substituiert sein kann, und

$A^5$ Wasserstoff, Methyl, Ethyl, Propyl, Butyl, β-Methoxy-ethyl, γ-Methoxypropyl oder Benzyl ist.

Einzelne Reste $A^1$ sind z. B. :

$CH_3$—CO—, $C_2H_5$—CO—, $C_6H_5$—CO—, (p)—$CH_3$—$C_6H_4$—CO—, (p)—Cl—$C_6H_4$—CO—, —CO—N—$(C_2H_5)_2$, —CO—NH—$C_6H_5$,

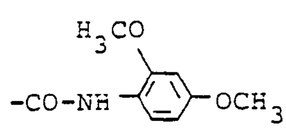

—CO—NH—(α)—$C_{10}H_7$, —CO—NH(β)—$C_{10}H_7$, —CO—NH—$C_6H_4$—(o)—$OCH_3$,

—CO—NH—$C_6H_4$—(o)—$CH_3$.

Für $A^2$ sind im einzelnen beispielsweise $CH_3$, $C_2H_5$ oder $C_6H_5$ zu nennen.

Die durch $A^1$ und $A^2$ gebildeten Reste eines Ringsystems entsprechen z. B. den Formeln :

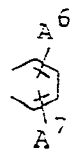 , 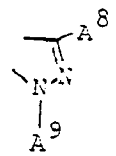 , 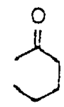 , 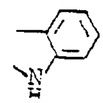 , 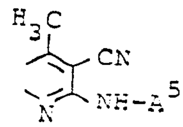 oder 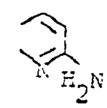

in denen

$A^5$ die vorgenannte Bedeutung hat,

$A^6$ Wasserstoff, Alkyl, Chlor, Brom, Nitro oder gegebenenfalls substituiertes Phenylazo,

$A^7$ Wasserstoff, Chlor oder Methyl,

$A^6$ und

$A^7$ zusammen die Ergänzung zu einem Benzring,

$A^8$ Wasserstoff, Methyl, Phenyl oder $C_1$- bis $C_4$-Alkoxycarbonyl und

$A^9$ Wasserstoff oder gegebenenfalls substituiertes Alkyl, Cycloalkyl, Aralkyl, Heteroaralkyl oder Aryl sind.

Alkylreste $A^3$ sind z. B. : Methyl oder Ethyl.

Einzelne Reste $A^4$ sind neben Wasserstoff z. B. : $CO_2CH_3$, $CO_2C_2H_5$, $CO_2C_3H_7$, $CO_2C_4H_9$, $CH_3$, $C_2H_5$, $C_6H_5$ oder $C_6H_4Cl$.

Die durch $A^3$ und $A^4$ zusammen gebildeten Benzringe können beispielsweise durch Cl oder $NO_2$ substituiert sein.

Einzelne Reste $A^6$ sind neben den bereits genannten z. B. Methyl, Ethyl oder gegebenenfalls durch Chlor, Brom, Methyl, Methoxy, Nitro oder Cyan substituiertes Phenylazo.

Für $A^9$ sind neben Wasserstoff z. B. zu nennen : $CH_3$, $C_2H_5$, $C_3H_7$—(n), $C_3H_7$—(i), $C_4H_9$—(n), $C_4H_9$—(i), $C_2H_4OCH_3$, $C_2H_4OC_6H_5$, $C_6H_{11}$, $CH_2$—$C_6H_5$,

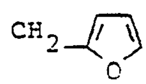 ,

—$C_6H_5$, $C_6H_4CH_3$, $C_6H_4C_2H_5$, $C_6H_4Cl$, $C_6H_3Cl_2$, $C_6H_4NO_2$, $C_6H_3ClNO_2$, $C_6H_3ClCH_3$ oder $C_6H_4Br$.

Die Reste Ar entsprechen z. B. den Formeln :

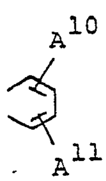 , 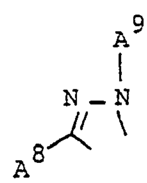 , 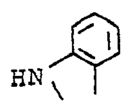 oder 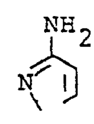

in denen

$A^{10}$ Wasserstoff, Chlor, Brom, Alkyl, Alkoxy, Aralkoxy, Aroxy oder gegebenenfalls substituiertes Phenylazo oder Amino,

$A^{11}$ Wasserstoff, Methyl, Methoxy oder Chlor und

$A^{10}$ und

$A^{11}$ zusammen die Ergänzung zu einem Benzring sind und

$A^8$ und

$A^9$ die angegebene Bedeutung haben.

Einzelne Reste $A^{10}$ sind neben den bereits genannten z. B. : $CH_3$, $C_2H_5$, $OCH_3$, $OC_2H_5$, $OC_2H_4OCH_3$, $OC_4H_9$—(n), $OC_6H_5$, $OCH_2C_6H_5$, $OC_2H_4OC_6H_5$, $NHCH_3$, $NHC_2H_5$, $NHC_4H_9$, $N(CH_3)_2$, $N(C_2H_5)_2$, $N(C_3H_7)_2$, $N(C_4H_9)_2$,

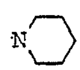 , 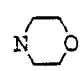 ,

$NHCOCH_3$, $NHCOC_2H_5$,

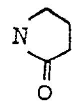 ,

$N(CH_3)C_2H_4CN$, $N(C_2H_5)C_2H_4CN$, $-N{=}N-C_6H_5$, $N{=}N-C_6H_4-(o)-OCH_3$, $-N{=}N-C_6H_4-(o)-Cl$ oder $N(CH_2CH{=}CH_2)C_2H_4CN$.

Die Reste D der Diazokomponenten stammen vorzugsweise aus der Anilinreihe und sie können z. B. durch Fluor, Chlor, Brom, $C_1$- bis $C_4$-Alkyl, $C_1$- bis $C_4$-Alkoxy, Phenoxy, Benzyloxy, Phenoxyethoxy, Cyan, Nitro, $C_1$- bis $C_4$-Alkylsulfonyl, Acetyl, Propionyl, Pyrrolidonyl, Carbonester, gegebenenfalls substituiertes Carbamoyl oder Sulfamoyl, Trifluormethyl oder gegebenenfalls substituiertes Arylazo substituiert sein.

Einzelne Substituenten sind neben den bereits genannten z. B. :

$CH_3$, $C_2H_5$, $C(CH_3)_3$, $C_4H_9-(n)$, $CH(CH_3)_2$, $OCH_3$, $OC_2H_5$, $OC_4H_9-(n)$, $-SO_2CH_3$, $SO_2C_2H_5$, $-SO_2C_4H_9$, $CO_2C_2H_5$, $CONH_2$, $CON(CH_3)_2$, $CON(C_2H_5)_2$, $CON[C_4H_9-(n)]_2$, $CONHCH_2CH(C_2H_5)C_4H_9$, $CO_2CH_3$, $CO_2C_{10}H_{21}$, $SO_2-N(CH_3)_2$, $SO_2N(C_2H_5)_2$, $-N{=}N-C_6H_5$ oder $-CO-NHC_3H_6OC_2H_4OC_6H_5$

Als Arylazoreste sind z. B. durch $CH_3$, $C_2H_5$, Cl, Br, $OCH_3$, $OC_2H_5$, $OC_4H_9$, $NO_2$, CN, Phenoxy oder Pyrrolidonyl substituiertes Phenylazo zu nennen.

Der Ring B der Formel I kann z. B. noch durch Methyl, Ethyl, Propyl, Butyl, Methoxy, Ethoxy, Chlor oder Brom substituiert sein.

Die Herstellung der Verbindungen der Formel I erfolgt nach an sich bekannten Methoden. Repräsentative Angaben für verschiedene Komplextypen finden sich in den Beispielen, in denen sich Angaben über Teile und Prozente, sofern nicht anders vermerkt, auf das Gewicht beziehen.

Die Verbindungen der Formel I eignen sich insbesondere zum Färben von Cellulosefasern und Polyestern oder Mischgeweben aus beiden, z. B. nach den in der DE-C-1 811 796 und den DE-A-2 524 243 und 2 528 743 beschriebenen Verfahren. Man erhält in der Regel Färbungen mit sehr guten Echtheiten.

Eine Gruppe besonders wertvoller Farbstoffe entspricht der Formel Ia

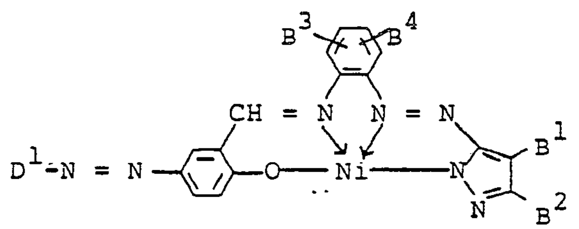

(Ia)

in der

$B^1$ Wasserstoff, Methyl oder Phenyl,

$B^1$ und

$B^2$ zusammen die Ergänzung zu einem Benzring,

$B^3$ Methyl, Alkoxy oder Benzyloxy,

$B^4$ Wasserstoff, Methyl, Chlor oder Methoxy und

$D^1$ gegebenenfalls durch Chlor, Brom, Alkyl, Alkoxy, substituiertes Alkoxy oder gegebenenfalls substituiertes Phenylazo substituiertes Phenyl sind.

Die Phenylazoreste können dabei durch $CH_3$, $C_2H_5$, Cl, Br, $OCH_3$, $OC_2H_5$ oder

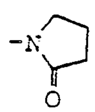

substituiert sein.

Substituierte Alkoxyreste sind z. B. durch $C_1$- bis $C_4$-Alkoxy oder Phenoxy substituiertes Ethoxy, z. B. also $CH_3OC_2H_4O-$, $C_2H_5OC_2H_4O-$, $C_4H_9OC_2H_4-$ oder $C_6H_5OC_2H_4O-$.

Eine weitere Gruppe wertvoller Farbstoffe entspricht der Formel Ib

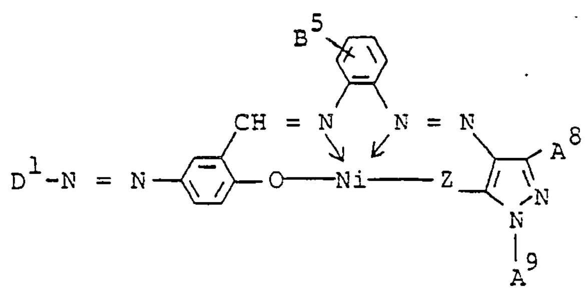

(Ib)

in der

$B^5$ Wasserstoff, Methyl, Ethyl, Methoxy, Ethoxy, Phenoxy, Acetylamino oder Chlor und

Z —O— oder —NH— sind und
$D^1$ und
$A^8$ und
$A^9$ die angegebene Bedeutung haben.
Bevorzugt sind dabei für
$A^8$ Wasserstoff und Methyl und für
$A^9$ H, $CH_3$, $C_2H_5$, $C_3H_7$—(n) und —(i), $CH_2$—$CH(CH_3)_2$, $CH_2C_6H_5$,

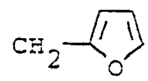

$C_6H_{11}$, $C_6H_5$, $C_6H_4CH_3$, $C_6H_4$—$C_2H_5$ oder $C_6H_4Cl$.

Weiterhin bevorzugt sind Verbindungen der Formel Ic

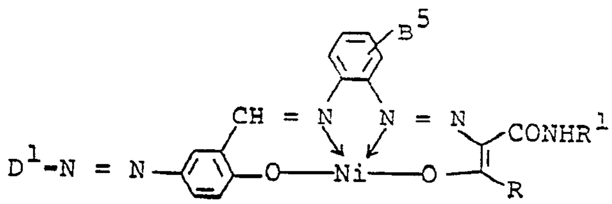

(Ic)

in der
R Methyl oder Phenyl und
$R^1$ gegebenenfalls durch $CH_3$, $C_2H_5$, $OCH_3$, $OC_2H_5$ oder Cl substituiertes Phenyl oder Naphthyl sind und
$B^5$ und
$D^1$ die angegebene Bedeutung haben.

Vorprodukt-Nr. 1

68,6 Teile p-[β-Phenoxyethoxy-]anilin werden in 2 500 Teilen Wasser und 250 Raumteilen konz. Salzsäure heiß gelöst. Dann versetzt man mit 1 500 Teilen Eis und diazotiert in 2 Stunden mit 100 Raumteilen 23 %iger $NaNO_2$-Lösung. Nach üblicher Zerstörung des Nitrit-Überschusses läßt man die Diazolösung bei 0-5 °C zu einem gerührten Gemisch von 36,8 Teilen Salicylaldehyd, 2 000 Teilen Wasser, 200 Teilen Soda und 1 000 Raumteilen N-Methylpyrrolidon-(2) fließen. Nach der Kupplung wird der Ansatz mit Eisessig auf pH = 4 gestellt, der Niederschlag abgesaugt, mit Wasser gewaschen und dann getrocknet. Man erhält 92 Teile der Aldehydkomponente der Formel

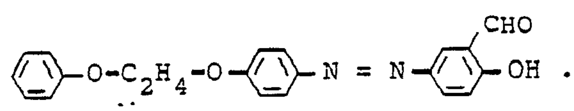

Vorprodukt-Nr. 2

810 Teile einer 12,5 %igen wäßrigen Paste des Kupplungsproduktes von diazotiertem o-Nitranilin auf Acetessigsäure-α-naphthylamid werden bei 90 °C in einer Mischung von 600 Raumteilen Ethanol und 300 Raumteilen Diethylenglykol durch Zutropfen der Lösung von 44 Teilen NaSH in 140 Teilen Wasser reduziert. Nach Reaktionsende (ca. 1 Stunde) wird auf Raumtemperatur abgekühlt, der Niederschlag abgesaugt, mit Wasser gewaschen und getrocknet. Man erhält 54 Teile des o-Aminophenylhydrazons der Formel.

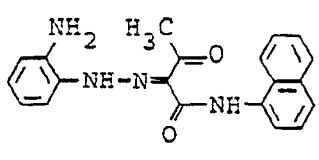

Vorprodukt-Nr. 3

Zu einem siedenden Gemisch von 1 000 Raumteilen Ethanol, 200 Teilen Wasser und 160 Teilen des Kupplungsproduktes von diazotiertem o-Nitranilin auf 3-Methyl-1-phenylpyrazolon-(5) wird in 2 Stunden die Lösung von 88 Teilen NaSH in 280 Teilen Wasser getropft. Nach einer weiteren Stunde Reaktionszeit wird abgekühlt, abgesaugt, mit Wasser gewaschen und getrocknet. 68 Teile der Verbindung der Formel.

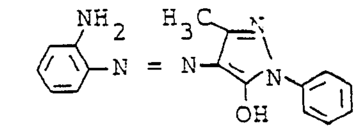

bzw. eines Tautomeren werden erhalten.

Beispiel 1

Ein siedendes Gemisch aus 250 Raumteilen Essigsäure, 7,2 Teilen der Aldehydkomponente (Vorprodukt-Nr. 1) und 6,92 Teilen des o-Aminophenylhydrazons (Vorprodukt-Nr. 2) wird mit der Lösung von 5 Teilen Nickel-II-acetat-Tetrahydrat in 12 Teilen Wasser versetzt. Nach 1 Stunde bei Rückfluß wird abgekühlt, mit 150 Teilen Wasser gefällt, abgesaugt, mit Methanol und anschließend Wasser gewaschen. Nach dem Trocknen erhält man 13 Teile eines hochlichtechten Goldgelbfarbstoffs der Formel

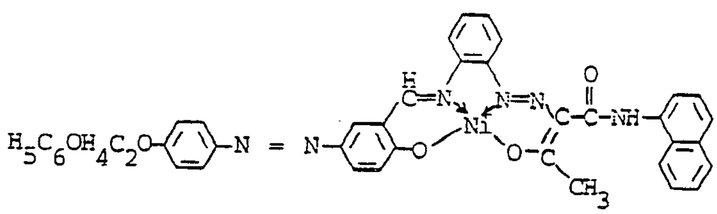

Man bedruckt ein Mischgewebe aus Polyester/Baumwolle mit einer Zubereitung, die aus 10 Teilen des obigen Farbstoffs, 100 Teilen des Umsetzungsproduktes aus Polyäthylenoxid vom Molekulargewicht 300 mit Borsäure im Molverhältnis 3 : 1,30 Teilen Ölsäurediäthanolamid und 860 Teilen einer 3 %igen Alginatverdickung besteht und trocknet den Druck bei 110 °C. Darauf behandelt man 5 Minuten bei 185 °C mit Heißdampf, spült kalt und seift bei 100 °C mit einem handelsüblichen Waschmittel. Man erhält einen licht-, wasch- und lösungsmittelechten goldgelben Druck auf weißem Fond.

Beispiel 2

Eine Mischung von 7,24 Teilen des Vorproduktes-Nr. 1 und 5,86 Teilen des Vorproduktes 3 sowie 5 Teilen Nickel-II-acetat-Tetrahydrat in 400 Teilen Eisessig wird 1 Stunde unter Rückfluß gerührt. Man saugt den Niederschlag bei 30 °C ab, wäscht mit Methanol und Wasser und trocknet, wobei 11,5 Teile eines braunen Farbstoffpulvers der Formel

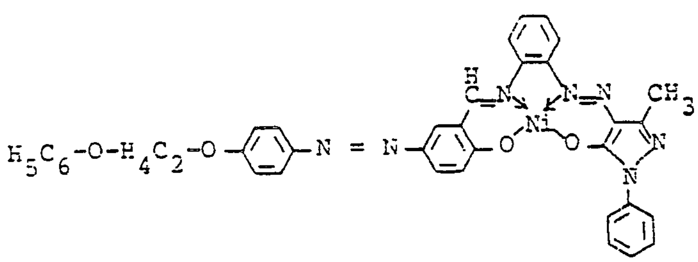

erhalten werden.

Ein Gewebe aus 65 Teilen Polyesterfaser und 35 Teilen merceresierter Baumwolle wird mit einer Flotte imprägniert, die 80 g/l einer 20 %igen, wäßrigen Zubereitung obigen Dispersionsfarbstoffes und 80 g/l eines Quell- und Farbstofflösemittels, bestehend aus 80 Teilen eines Polyäthylenglykols mit einem Molekulargewicht von 1 500 und 20 Teilen eines Umsetzungsproduktes aus 1 Mol Hexamethylendiamin und 15 Mol Äthylenoxid enthält.

Der pH-Wert der Flotte wird mit Zitronensäure auf 6 eingestellt. Das imprägnierte Gewebe wird 60 Sekunden bei 120 °C getrocknet und zur Fixierung des Farbstoffes weitere 60 Sekunden einer Temperatur von 215 °C ausgesetzt. Danach wird kalt und warm gespült und 20 Minuten bei 100 °C in Gegenwart eines handelsüblichen Waschmittels geseift. Man erhält eine braungelbe Färbung mit guten Licht-, Wasch- und Reibechtheiten.

Beispiel 3

24,2 Teile 3-Aminoindazol werden in einem Gemisch von 25 Raumteilen konzentrierter Salzsäure und 150 Raumteilen Wasser gelöst und nach Filtration mit 150 Teilen Eis und 30 Raumteilen Natriumnitritlösung (23 %ig) versetzt. Nach 1 Stunde bei 0-5 °C wird der Nitritüberschuß wie üblich zerstört. In diese Diazoniumsalzlösung läßt man die Lösung von 13,7 Teilen 3-Methoxy-4-methylanilin in 60 Raumteilen N,N-Dimethylformamid einfließen und tropft dann so viel gesättigte Natriumacetatlösung zu, bis ein pH-Wert von 4 erreicht ist ; während dieser Operationen wird die Temperatur des Kupplungsansatzes durch kontinuierliche Eiszugabe bei 0-5 °C gehalten. Der Ansatz wird über Nacht gerührt, dann auf 75 °C erhitzt, der Niederschlag abgesaugt, mit essigsaurem Wasser sowie heißem Wasser gewaschen und getrocknet. Es resultieren 25 Teile des Kupplungsproduktes der Formel.

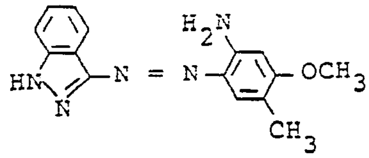

25,29 Teile dieses Produktes werden mit 21,6 Teilen Nickel-II-chlorid-Hexahydrat sowie 20,34 Teilen des Kupplungsproduktes von Anilin auf Salicylaldehyd in 300 Raumteilen N,N-Dimethylformamid 2 Stunden auf 100 °C erwärmt.

Dann wird abgekühlt, der Niederschlag abgesaugt und mit Methanol und heißem Wasser gewaschen. Nach dem Trocknen erhält man ein schwarzes Farbstoffpulver der Formel

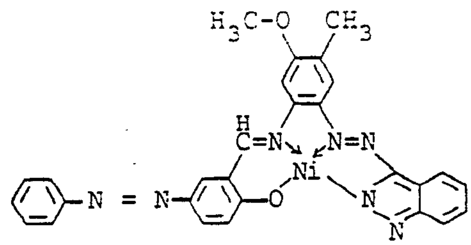

Ein Gewebe aus 65 Teilen Polyester-Faser und 35 Teilen mercerisierter Baumwolle wird mit einer Flotte imprägniert, die 10 g/l einer 20 %igen flüssigen Zubereitung des obigen Dispersionsfarbstoffes und 80 g/l eines Quell- und Farbstofflösungsmittels aus einer Mischung aus 3 Teilen Polyäthylenglykol mit einem Molekulargewicht von 1 500 und 1 Teil eines Umsetzungsproduktes aus 1 Mol Neopentandiamin und 15,6 Mol Äthylenoxid enthält. Der pH-Wert der Klotzflotte wird mit Glutarsäure auf 6 eingestellt. Das Gewebe wird mit der Klotzflotte imprägniert, wobei die Flottenaufnahme 45 % beträgt. Das Gewebe wird dann 60 Sekunden bei einer Temperatur von 120 °C getrocknet und 90 Sekunden bei 225 °C in einem kontinuierlich arbeitenden Labortrockner fixiert. Danach wird es kalt und warm gespült und 5 Minuten bei 100 °C in Gegenwart eines handelsüblichen Waschmittels gewaschen. Der Farbstoff ist fast vollständig auf dem Gewebe fixiert. Man erhält eine Oliv-Färbung mit sehr guten Licht-, Wasch- und Reibechtheiten.

Bespiel 4

145 Teile des Kupplungsproduktes von diazotiertem p-Methoxy-o-nitranilin auf 5-Amino-1-furfurylpyrazol werden bei 60 °C in 1 000 Raumteilen N,N-Dimethylformamid in Gegenwart von 15 Teilen Raney-Nickel mit Wasserstoff hydriert. Danach wird zwecks Entfernung des Katalysators filtriert, das Filtrat in ca. 8 000 Teile Eiswasser gegeben und der Niederschlag abgesaugt, mit Wasser gewaschen und getrocknet. Man erhält so das Reduktionsprodukt der Formel

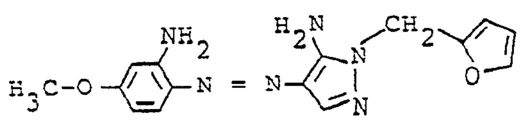

In 100 Raumteilen N,N-Dimethylformamid werden 9,36 Teile des obigen Produktes zusammen mit 7,68 Teilen des Kupplungsproduktes von diazotiertem o-Anisidin mit Salicylaldehyd und 7,2 Teilen Nickel-II-chlorid-Hexahydrat 3 Stunden bei 100 °C gerührt. Anschließend läßt man abkühlen und saugt den Kristallbrei ab. Es wird noch mit Methanol und heißem Wasser gewaschen und getrocknet. So erhält man den Farbstoff der Formel

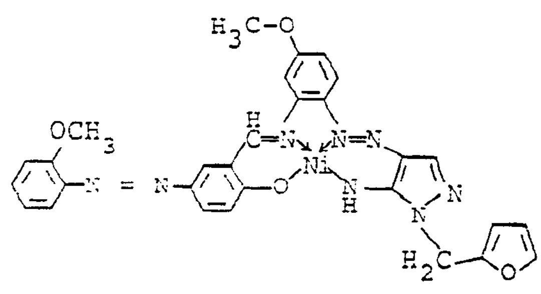

als braunes Pulver.

Ein Gewebe aus 67 Teilen Polyesterfaser und 33 Teilen Baumwolle (mercerisiert) wurde mit einer Flotte imprägniert, die 100 g/l einer Mischung aus 80 Teilen eines Borsäureesters von Polyäthylenglykol (Molgewicht etwa 800) im Molverhältnis 1 : 3 und 20 Teilen Äthylendiamin, umgesetzt mit 35 Mol Äthylenoxid, enthielt. Die Flottenaufnahme betrug 80 %. Anschließend wurde 15 Minuten bei 60 bis 70 °C getrocknet. Auf das Substrat wurde folgende Druckpaste gedruckt :

500 Teile wäßrige Stärkeäther-Verdickung (10 %),
2 Teile Zitronensäure,
10 Teile m-nitrobenzolsulfonsaures Natrium,
50 Teile des obigen Farbstoffes und 438 Teile Wasser.

Der Druck wurde 2 Minuten bei 130 °C getrocknet und 90 Sekunden bei 210 °C mit Heißluft behandelt. Nach dem Spülen wird ein gelbbrauner Druck auf weißem Fond erhalten, der gute Licht-, Wasch- und Reibechtheiten aufweist.

Beispiel 5

85,2 Teile des Kupplungsproduktes von diazotiertem o-Amino-phenol auf m-N,N-Diethylaminoanilin und 81 Teile des Kupplungsproduktes von diazotiertem p-Phenetidin auf Salicylaldehyd werden zusammen mit 72 Teilen Nickel-II-chlorid-Hexahydrat in 1 000 Raumteilen N,N-Dimethylformamid 3 Stunden bei 100 °C gerührt. Bei 40 °C werden die ausgefallenen Kristalle abgesaugt, mit N,N-Dimethylformamid, Methanol und heißem Wasser gewaschen und getrocknet. Es fallen 130 Teile eines schwarzen Pulvers der Formel

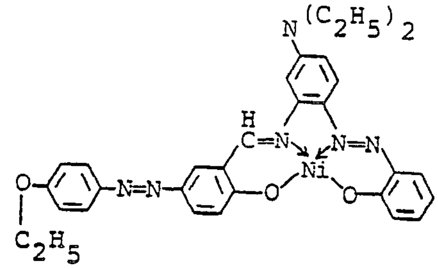

an, das sich in N-Methylpyrrolidon-(2) mit olivgrüner Farbe löst.

Man bedruckt ein Mischgewebe aus Polyester/Baumwolle (65 : 35) mit einer Paste, die aus 20 Teilen obigen Farbstoffes, 110 Teilen Polyäthylenoxid vom Molekulargewicht 350, 30 Teilen Ölsäurediäthanolamid und 840 Teilen einer 10 %igen Alginatverdickung besteht. Man trocknet das bedruckte Material bei 100 °C und fixiert danach 60 Sekunden mit Heißluft bei 190/215 °C. Der Druck wird sodann kalt und warm gespült und bei 100 °C mit einem handelsüblichen Waschmittel geseift. Man erhält einen olivgrünen Druck auf weißem Fond mit guten Echtheiten.

Auf analoge Weise werden die folgenden Farbstoffe erhalten, die sich nach den angegebenen Methoden auf Baumwolle und Mischgewebe färben und drucken lassen und Färbungen mit guten Echtheiten ergeben.

Die in den folgenden Beispielen genannten Farbstoffe lassen sich wie folgt in eine handelsfähige Farbstoffzubereitung überführen :

30 Teile Farbstoff
6 Teile Dispergiermittel
10 Teile Wasserretentionsmittel
1 Teil Desinfektionsmittel und ungefähr
53 Teile Wasser werden in einer Rührwerksmühle bis zu einer Teilchengröße von ungefähr 0,5 µ vermahlen. Man erhält so eine lagerstabile Dispersion des Farbstoffes.

Die Substituenten $T^1$ bis $T^6$ sowie Me und $A^1$ und $A^2$ der in der folgenden Tabelle aufgeführten Farbstoffe sowie die in den Tabellenspalten vorangestellten Indexzahlen entsprechen der Formel

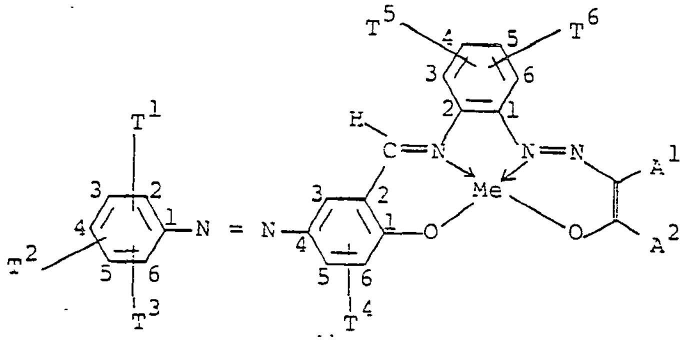

| Bsp. | $T^1$ | $T^2$ | $T^3$ | $T^4$ | $T^5$ | $T^6$ | $A^1$ | $A^2$ | Me | Farbton |
|---|---|---|---|---|---|---|---|---|---|---|
| 6 | 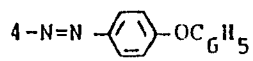 | $2-OCH_3$ | $5-OCH_3$ | H | H | H | 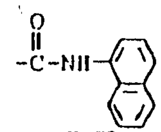 | $CH_3$ | Ni | rotbraun |
| 7 | " | " | " | " | " | " | 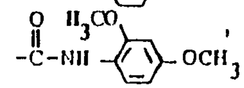 | " | " | braun |
| 8 | H | H | H | " | " | " | " | " | " | goldgelb |
| 9 | " | " | " | " | $4-OCH_3$ | " | " | " | " | " |
| 10 | " | " | " | " | " | " | $-\overset{O}{\overset{\|}{C}}-NH-C_6H_5$ | " | " | " |
| 11 | $4-N=N-C_6H_5$ | " | " | " | " | " | " | " | " | gelbbraun |
| 12 | " | " | " | " | H | " | $-\overset{O}{\overset{\|}{C}}-N(C_2H_5)_2$ | " | " | " |
| 13 | " | " | " | " | " | " | $-\overset{O}{\overset{\|}{C}}-CH_3$ | " | " | " |
| 14 | " | " | " | " | " | " | $-\overset{O}{\overset{\|}{C}}-C_2H_5$ | " | " | " |
| 15 | " | " | " | " | " | " | $-\overset{O}{\overset{\|}{C}}-C_6H_5$ | " | " | " |

| Bsp. | $T^1$ | $T^2$ | $T^3$ | $T^4$ | $T^5$ | $T^6$ | $A^1$ | $A^2$ | Me | Farbton |
|---|---|---|---|---|---|---|---|---|---|---|
| 16 | 4-N=N-$C_6H_5$ | H | H | H | H | H | $-\overset{O}{\overset{\|}{C}}-C_6H_4-CH_3$-(p) | $CH_3$ | H | gelbbraun |
| 17 | " | " | " | " | " | " | $-\overset{O}{\overset{\|}{C}}-C_6H_4-Cl$-(p) | " | " | " |
| 18 | " | " | " | " | " | " | $-\overset{O}{\overset{\|}{C}}-CH_3$ | $C_2H_5$ | " | " |
| 19 | 2-$OCH_3$ | " | " | " | " | " | $-\overset{O}{\overset{\|}{C}}-NH-C_6H_5$ | $CH_3$ | " | goldgelb |
| 20 | 4-N=N- 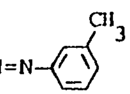 | 3-$CH_3$ | " | " | " | " | " | " | " | gelbbraun |
| 21 | " | " | " | " | " | " | $A^1, A^2$: 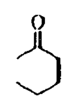 | | " | " |
| 22 | " | " | " | " | " | " | $A^1, A^2$: 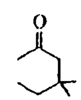 | | " | " |
| 23 | 4-O-$C_6H_5$ | H | " | " | 4-$NH_2$ | " | $-\overset{O}{\overset{\|}{C}}-NHC_6H_5$ | $CH_3$ | " | orange |

| Bsp. | $T^1$ | $T^2$ | $T^3$ | $T^4$ | $T^5$ | $T^6$ | $A^1$ | $A^2$ | Me | Farbton |
|---|---|---|---|---|---|---|---|---|---|---|
| 24 | $4-O-C_6H_5$ | H | H | H | $4-OCH_3$ | H | $-\overset{O}{\overset{\|}{C}}-NH-C_6H_5$ | $CH_3$ | Ni | orange |
| 25 | $4-OC_2H_4OC_6H_5$ | " | " | " | H | " | $-\overset{O}{\overset{\|}{C}}-NH-C_6H_4-2-CH_3$ | " | " | goldgelb |
| 26 | " | " | " | " | " | " | $-\overset{O}{\overset{\|}{C}}-NH-C_6H_4-2-C_2H_5$ | " | " | " |
| 27 | " | " | " | " | " | " | $-\overset{O}{\overset{\|}{C}}-NH-C_6H_4-2-OCH_3$ | " | " | " |
| 28 | " | " | " | " | " | " | $-\overset{O}{\overset{\|}{C}}-NH-C_6H_4-2-O-C_2H_5$ | " | " | " |
| 29 | " | " | " | " | " | " | $-\overset{O}{\overset{\|}{C}}-NH-C_6H_4-2-Cl$ | " | " | " |

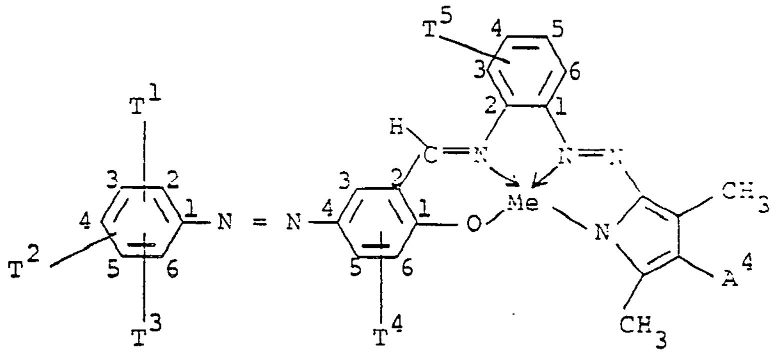

| Bsp. | $T^1$ | $T^2$ | $T^3$ | $T^4$ | $T^5$ | $A^4$ | Me | Farbton |
|---|---|---|---|---|---|---|---|---|
| 30 | H | H | H | H | 4-$OCH_3$ | $CO_2C_2H_5$ | Ni | dunkel-braun |
| 31 | 4-N=N-$C_6H_5$ | H | H | " | " | " | " | " |
| 32 | 4-N=N-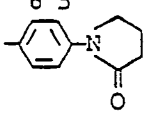 | 2-$OCH_3$ | 5-$CH_3$ | " | " | " | " | bordo |
| 33 | 4-N=N-$C_6H_5$ | H | H | " | H | " | " | braun |
| 34 | " | " | " | " | " | $CO_2CH_3$ | | " |
| 35 | " | " | " | " | 4-Cl | $CO_2C_2H_5$ | " | " |
| 36 | 2-$OCH_3$ | " | " | " | 4-$OCH_3$ | " | " | " |
| 37 | " | " | " | 6-$OCH_3$ | " | " | " | " |

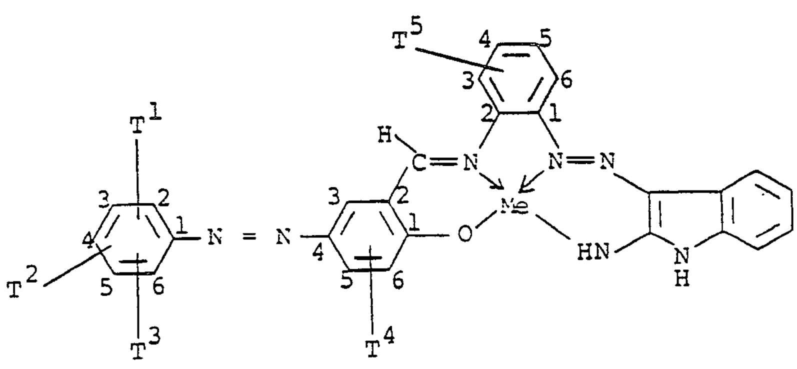

| Bsp. | $T^1$ | $T^2$ | $T^3$ | $T^4$ | $T^5$ | Me | Farbton |
|---|---|---|---|---|---|---|---|
| 38 | H | H | H | H | H | Ni | braun |
| 39 | " | " | " | " | 4-$OCH_3$ | " | dunkelbraun |
| 40 | " | " | " | " | Cl | " | " |
| 41 | 2-$OCH_3$ | " | " | " | 4-$OCH_3$ | " | braun |
| 42 | 4-N=N-$C_6H_5$ | " | " | " | " | " | " |
| 43 | " | " | " | 6-$OCH_3$ | " | " | " |
| 44 | 2-Cl | " | " | H | " | " | " |

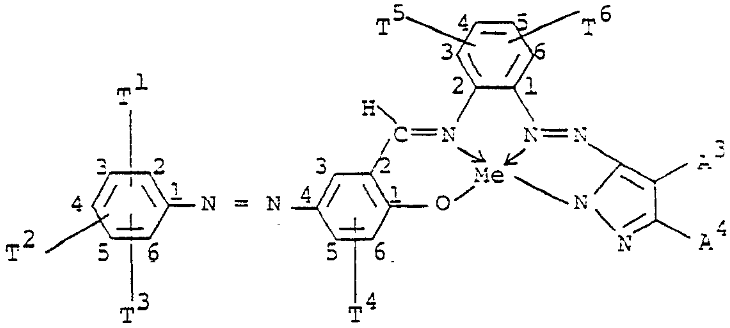

| Bsp. | $T^1$ | $T^2$ | $T^3$ | $T^4$ | $T^5$ | $T^6$ | $A^3$ | $A^4$ | Me | Farbton |
|---|---|---|---|---|---|---|---|---|---|---|
| 45 | H | H | H | H | 4-$OCH_3$ | 5-$CH_3$ | H | -$C_6H_5$ | Ni | gelbstichig oliv |
| 46 | " | " | " | " | " | " | 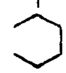 | | " | " |
| 47 | 4-N=N-$C_6H_5$ | " | " | " | " | " | H | H | " | gelbbraun |
| 48 | 2-$OCH_3$ | " | " | " | " | " | " | " | " | gelbstichig oliv |
| 49 | H | " | " | " | 4-N$(C_2H_5)_2$ | H | " | " | " | braun |
| 50 | 4-N=N-$C_6H_5$ | " | " | " | " | " | " | " | " | " |

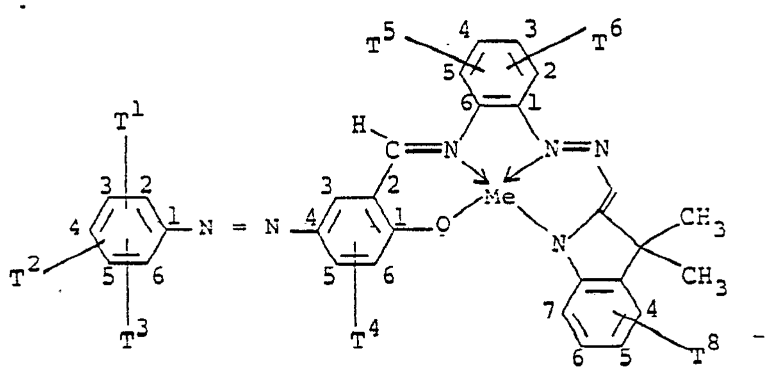

| Bsp. | $T^1$ | $T^2$ | $T^3$ | $T^4$ | $T^5$ | $T^6$ | $T^8$ | Me | Farbton |
|---|---|---|---|---|---|---|---|---|---|
| 51 | H | H | H | H | 4-$OCH_3$ | H | H | Ni | braun |
| 52 | " | " | " | " | " | " | 5-Cl | " | " |
| 53 | 2-$OCH_3$ | " | " | " | " | " | H | " | " |
| 54 | " | " | " | " | " | " | 5-Cl | " | " |

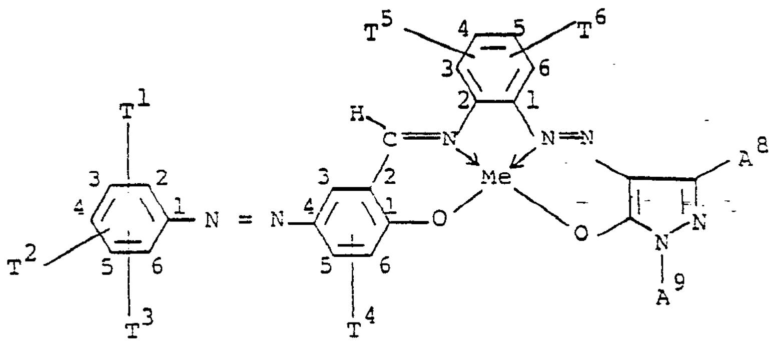

| Bsp. | $T^1$ | $T^2$ | $T^3$ | $T^4$ | $T^5$ | $T^6$ | $A^8$ | $A^9$ | Me | Farbton |
|---|---|---|---|---|---|---|---|---|---|---|
| 55 | H | H | H | H | 4-$OCH_3$ | H | $CH_3$ | $-C_6H_4-2-C_2H_5$ | III | hellbraun |
| 56 | " | " | " | " | " | " | " | H | " | " |
| 57 | " | " | " | " | " | " | " | $CH_3$ | " | " |
| 58 | " | " | " | " | " | " | " | $C_6H_5$ | " | " |
| 59 | 4-N=N-$C_6H_5$ | " | " | " | " | " | " | " | " | gelbbraun |
| 60 | " | " | " | " | " | " | " | $-C_6H_3-2,5-Cl_2$ | " | " |
| 61 | " | " | " | " | " | " | $C_6H_5$ | H | " | " |
| 62 | " | " | " | " | " | " | $CO_2CH_3$ | $C_6H_5$ | " | " |
| 63 | " | " | " | " | " | " | $CO_2C_2H_5$ | " | " | " |
| 63 | " | " | " | " | " | " | $CO_2C_3H_7$ | " | " | " |
| 65 | " | " | " | " | " | " | $CO_2C_4H_9$ | " | " | " |
| 66 | " | " | " | " | H | " | $CH_3$ | " | " | " |
| 67 | H | " | " | " | 4-$OCH_3$ | 5-N=N-$C_6H_5$ | " | " | " | " |
| 68 | 4-N=N-$C_6H_5$ | 2-$OCH_3$ | 5-$OCH_3$ | " | " | H | " | " | " | rotbraun |
| 69 | 2-$OCH_3$ | H | H | 6-$OCH_3$ | " | " | " | " | " | gelbbraun |
| 70 | " | " | " | H | " | " | " | " | " | " |
| 71 | " | " | " | " | " | " | " | $C_6H_4-2-CH_3$ | " | " |
| 72 | " | " | " | " | " | " | " | $C_6H_4-2-Cl$ | " | " |
| 73 | " | " | " | " | " | " | " | $C_6H_4-3-Cl$ | " | " |
| 74 | " | " | " | " | " | " | " | $C_6H_3-2-Cl-6-CH_3$ | " | " |
| 75 | " | " | " | " | " | " | " | $C_6H_4-4-Cl$ | " | " |
| 76 | " | " | " | " | " | " | " | $C_6H_4-4-NO_2$ | " | " |
| 77 | " | " | " | " | " | " | " | $C_6H_4-4-CH_3$ | " | " |

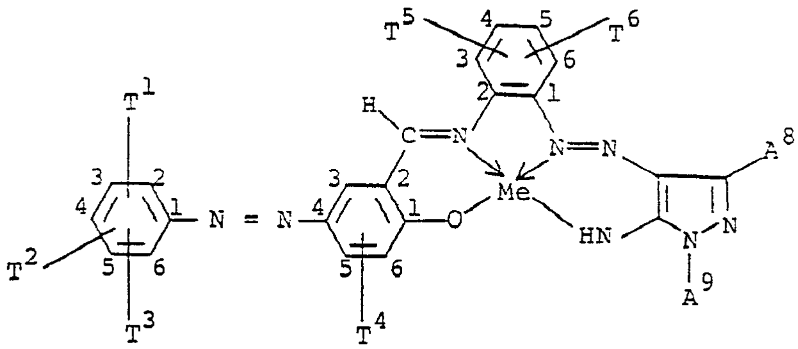

| Bsp. | $T^1$ | $T^2$ | $T^3$ | $T^4$ | $T^5$ | $T^6$ | $A^8$ | $A^9$ | Me | Farbton |
|---|---|---|---|---|---|---|---|---|---|---|
| 78 | H | H | H | H | $4-OC_6H_5$ | H | H | 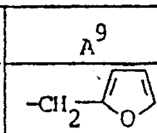 | Ni | hellbraun |
| 79 | $2-OCH_3$ | $4-OCH_3$ | 5-Cl | " | $4-OCH_3$ | " | " | " | " | " |
| 80 | " | " | " | " | " | " | " | $-CH_2C_6H_5$ | " | gelbbraun |
| 81 | " | " | " | " | " | " | " | $-CH_2CH(CH_3)_2$ | " | " |
| 82 | " | " | " | " | " | " | " | $-C_6H_{11}$ | " | " |
| 83 | " | $5-OCH_3$ | H | " | " | " | " | 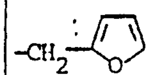 | " | braun |
| 84 | " | " | " | " | " | " | " | $-CH_2C_6H_5$ | " | " |
| 85 | " | " | " | " | H | " | " | 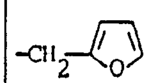 | " | gelbbraun |
| 86 | " | " | " | " | 4-Cl | " | " | " | " | " |
| 87 | 2-Cl | 6-Cl | " | " | $4-OCH_3$ | " | " | " | " | " |
| 88 | " | " | " | " | " | " | " | $CH_2-C_6H_5$ | " | " |
| 89 | $2-NO_2$ | H | " | " | " | " | " | " | " | " |
| 90 | " | " | " | " | " | " | " | 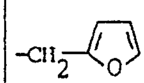 | " | " |
| 91 | $2-OCH_3$ | $5-CH_3$ | " | " | " | " | " | " | " | braun |
| 92 | " | " | " | " | " | " | " | $CH_2-C_6H_5$ | " | " |
| 93 | 4-N=N- 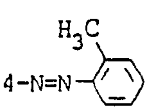 | $2-CH_3$ | " | " | " | " | " | " | " | " |
| 94 | " | " | " | " | " | " | " | 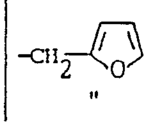 | " | |
| 95 | " | " | " | " | 4-Br | " | " | " | " | " |

| Bsp. | $T^1$ | $T^2$ | $T^3$ | $T^4$ | $T^5$ | $T^6$ | $A^8$ | $A^9$ | Me | Farbton |
|---|---|---|---|---|---|---|---|---|---|---|
| 96 | $H_3C$ 4-N=N- 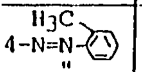 | 2-$CH_3$ | H | H | 4-$OCH_3$ | H | H | $C_3H_7$-(i) | Ni | braun |
| 97 | " | " | " | " | " | " | " | $C_3H_7$-(n) | " | " |
| 98 | " | " | " | " | " | " | " | $C_4H_9$-(n) | " | " |
| 99 | 2-$OCH_3$ | H | " | " | " | " | " | $C_4H_9$-(n) | " | gelbbraun |
| 100 | " | " | " | " | " | " | " | $C_2H_4$-$OCH_3$ | " | " |
| 101 | " | " | " | " | " | " | " | $C_2H_4.OC_6H_5$ | " | " |
| 102 | " | " | " | " | " | " | " | $C_6H_{11}$ | " | " |
| 103 | 4-$OC_6H_5$ | " | " | " | " | " | " | $CH_2$ 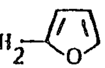 | " | braun |
| 104 | " | " | " | " | " | " | " | $CH_2$-$C_6H_5$ | " | " |
| 105 | 3-$CH_3$ | 4-$CH_3$ | " | " | " | " | " | " | " | gelbbraun |
| 106 | " | " | " | " | " | " | " | $CH_2$ 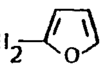 | " | " |
| 107 | " | " | " | 6-$OCH_3$ | " | " | " | " | " | " |
| 108 | 4-$OC_2H_5$ | H | " | H | " | " | " | " | " | " |
| 109 | " | " | " | " | H | " | " | " | " | " |
| 110 | " | " | " | " | 4-$OCH_3$ | " | " | $CH_2C_6H_5$ | " | " |
| 111 | 4-$OCH_3$ | " | " | " | " | " | " | " | " | " |
| 112 | " | " | " | " | " | " | " | $CH_2$ 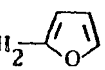 | " | " |
| 113 | 2-$OCH_3$ | " | " | " | " | " | " | $CH_2$-$C_6H_5$ | " | " |
| 114 | " | " | " | " | " | 5-N=N-$C_6H_5$ | " | $CH_2$ 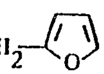 | " | " |
| 115 | " | " | " | 6-Br | " | H | " | " | " | " |
| 116 | " | " | " | 6-$OCH_3$ | " | " | " | " | " | " |

| Bsp. | $T^1$ | $T^2$ | $T^3$ | $T^4$ | $T^5$ | $T^6$ | $A^8$ | $A^9$ | Me | Farbton |
|---|---|---|---|---|---|---|---|---|---|---|
| 117 | $2-OCH_3$ | H | H | H | $4-OCH_3$ | H | $CH_3$ | H | Ni | gelbbraun |
| 118 | " | " | " | " | " | " | $C_6H_5$ | " | " | " |
| 119 | " | " | " | " | 4-Cl | " | H | 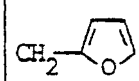 | " | " |
| 120 | " | " | " | " | $4-OC_2H_5$ | " | " | " | " | " |
| 121 | " | " | " | " | $4-NH-CO-CH_3$ | " | " | " | " | " |
| 122 | " | " | " | " | $4-OC_6H_5$ | " | " | " | " | " |
| 123 | " | " | " | " | 4-Br | " | " | " | " | " |
| 124 | 2-Cl | " | " | " | $4-OCH_3$ | " | " | " | Co | braun |
| 125 | " | " | " | " | " | " | " | " | Mn | hellbraun |
| 126 | " | " | " | " | " | " | " | " | Zn | " |
| 127 | " | " | " | " | " | " | " | " | Cu | " |
| 128 | $4-CH_3$ | " | " | " | " | " | " | " | Ni | gelbbraun |
| 129 | " | " | " | " | " | " | " | $CH_2C_6H_5$ | " | " |
| 130 | $2-CH_3$ | " | " | " | " | " | " | " | " | " |
| 131 | " | " | " | " | " | " | " | 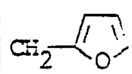 | " | " |
| 132 | 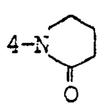 | " | " | " | " | " | " | " | " | " |
| 133 | " | " | " | " | " | " | " | $CH_2-C_6H_5$ | " | " |
| 134 | " | " | " | " | $4-OC_6H_5$ | " | " | 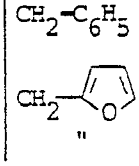 | " | " |
| 135 | $2-OC_6H_5$ | " | " | " | $4-OCH_3$ | " | " | " | " | " |

| Bsp. | $T^1$ | $T^2$ | $T^3$ | $T^4$ | $T^5$ | $T^6$ | $A^8$ | $A^9$ | Me | Farbton |
|---|---|---|---|---|---|---|---|---|---|---|
| 136 | $2-OC_6H_5$ | H | H | H | $4-OCH_3$ | H | H | $CH_2-C_6H_5$ | Ni | gelbbraun |
| 137 | H | " | " | $6-OCH_3$ | " | " | " | " | " | " |
| 138 | " | " | " | " | " | " | " | $CH_2$ 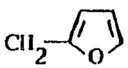 | " | " |
| 139 | 4-N=N- 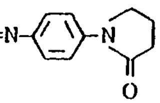 | $2-OCH_3$ | $5-OCH_3$ | H | " | " | " | " | " | braunrot |
| 140 | " | " | " | " | " | " | " | $CH_2-C_6H_5$ | " | " |
| 141 | " | " | " | " | 4-Cl | " | " | $CH_2$ 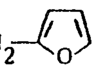 | " | bordo |
| 142 | $4-O-CH_2-C_6H_5$ | H | H | " | $4-OCH_3$ | " | " | " | " | gelbbraun |
| 143 | " | " | " | " | " | " | " | $CH_2-C_6H_5$ | " | " |
| 144 | 4-N=N- 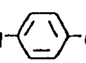 $-OCH_3$ | $2-OCH_3$ | $5-CH_3$ | " | " | " | " | " | " | braunrot |
| 145 | " | " | " | " | " | " | " | $CH_2$ 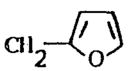 | " | " |
| 146 | $4-N=N-C_6H_5$ | " | " | " | " | " | " | " | " | " |
| 147 | " | " | " | " | " | " | " | $CH_2-C_6H_5$ | " | bordo |
| 148 | " | " | $5-OCH_3$ | " | " | " | " | " | " | rotbraun |
| 149 | " | " | $5-OCH_3$ | " | " | " | " | $CH_2$ 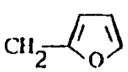 | " | " |
| 150 | H | H | H | 6-Br | " | " | " | " | " | hellbraun |
| 151 | " | " | " | " | " | " | " | $CH_2-C_6H_5$ | " | " |
| 152 | 4-Cl | " | " | H | " | " | " | " | " | gelbbraun |

| Bsp. | $T^1$ | $T^2$ | $T^3$ | $T^4$ | $T^5$ | $T^6$ | $A^8$ | $A^9$ | Me | Farbton |
|---|---|---|---|---|---|---|---|---|---|---|
| 153 | 4-Cl | H | H | H | 4-$OCH_3$ | H | H | 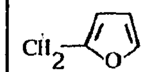 | Ni | gelbbraun |
| 154 | 4-O-$C_2H_4OC_6H_5$ | " | " | " | " | " | " | " | " | " |
| 155 | " | " | " | " | " | " | " | $CH_2$-$C_6H_5$ | " | " |
| 156 | 2-$OCH_3$ | " | " | " | " | " | $CH_3$ | H | " | hellbraun |
| 157 | " | " | " | " | " | " | " | $CH_2$-$C_6H_5$ | " | " |
| 158 | " | " | " | " | " | " | " | $CH_3$ | " | " |
| 159 | " | " | " | " | " | " | " | $C_2H_5$ | " | " |
| 160 | 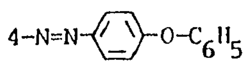 | 2-$OCH_3$ | 5-$OCH_3$ | " | H | " | " | $C_6H_5$ | " | braunrot |
| 161 | 4-N=N-$C_6H_5$ | H | H | " | 4-$OCH_3$ | " | H | 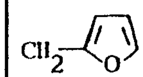 | " | braun |
| 162 | " | " | " | " | " | " | " | $CH_2$-$C_6H_5$ | " | " |
| 163 | " | " | " | " | " | " | " | $CH_2CH(CH_3)_2$ | " | " |
| 164 | 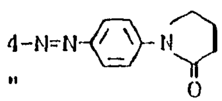 | 2-$OCH_3$ | 5-$CH_3$ | " | " | " | " | 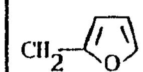 | " | rotbraun |
| 165 | " | " | " | " | " | " | " | $CH_2$-$C_6H_5$ | " | " |
| 166 | O<br>‖<br>2-CO-$CH_3$ | H | H | " | " | " | " | " | " | braun |
| 167 | " | " | " | " | " | " | " | 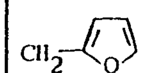 | " | " |
| 168 | H | " | " | " | 4-$SO_2N(C_2H_5)_2$ | " | " | $CH_2$-$C_6H_5$ | " | hellbraun |
| 169 | " | " | " | " | 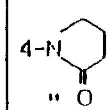 | " | " | " | " | braun |
| 170 | " | " | " | " | " | " | " | 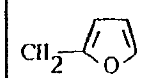 | " | " |
| 171 | " | " | " | " | 4-$OCH_3$ | " | " | $CH_2$-$CH(CH_3)_2$ | " | " |

| Bsp. | $T^1$ | $T^2$ | $T^3$ | $T^4$ | $T^5$ | $T^6$ | $A^8$ | $A^9$ | Me | Farbton |
|---|---|---|---|---|---|---|---|---|---|---|
| 172 | H | H | H | H | 4-Cl | H | H | 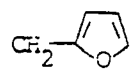 | Ni | braun |
| 173 | " | " | " | " | $4-O-C_6H_5$ | " | " | " | " | " |
| 174 | " | " | " | " | $4-O-C_2H_5$ | " | $CH_3$ | $-C_6H_5$ | " | " |
| 175 | " | " | " | " | " | " | H | $-CH_2C_6H_5$ | " | " |
| 176 | " | " | " | " | $4-OCH_3$ | " | " | " | " | gelbbraun |
| 177 | " | " | " | " | " | " | " | 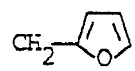 | " | " |
| 178 | 2-Cl | " | " | " | " | " | " | $CH_2C_6H_5$ | " | " |
| 179 | $2-O-C_2H_5$ | " | " | " | " | " | " | " | " | " |
| 180 | " | " | " | " | " | " | " | 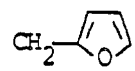 | " | " |
| 181 | $3-CH_3$ | " | " | " | " | " | " | " | " | " |
| 182 | " | " | " | " | " | " | " | $CH_2C_6H_5$ | " | " |
| 183 | 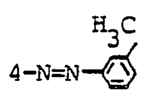 | $3-CH_3$ | " | " | " | " | " | 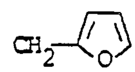 | " | braun |
| 184 | " | " | " | " | " | " | " | $CH_2-C_6H_5$ | " | " |
| 185 | $2-OCH_3$ | 5-Cl | " | " | " | " | " | " | " | gelbbraun |
| 186 | " | " | " | " | " | " | " | 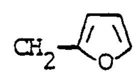 | " | " |
| 187 | $2-O-C_2H_5$ | $5-O-C_2H_5$ | " | " | " | " | " | " | " | " |
| 188 | " | " | " | " | " | " | " | $CH_2-C_6H_5$ | " | " |
| 189 | $2-CH_3$ | $4-CH_3$ | " | " | " | " | " | " | " | " |
| 190 | " | " | " | " | " | " | " | 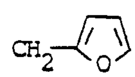 | " | " |

| Bsp. | $T^1$ | $T^2$ | $T^3$ | $T^4$ | $T^5$ | $T^6$ | $A^8$ | $A^9$ | Me | Farbton |
|---|---|---|---|---|---|---|---|---|---|---|
| 191 | 2-Br | H | H | H | $4-OCH_3$ | H | H | 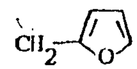 | Ni | gelbbraun |
| 192 | 2-F | " | " | " | " | " | " | " | " | " |
| 193 | $2-O-C_3H_7$ | " | " | " | " | " | " | " | " | " |
| 194 | $2-O-C_4H_9$ | " | " | " | " | " | " | " | " | " |
| 195 | $4-C_4H_9$ | " | " | " | " | " | " | " | " | " |
| 196 | $4-C_3H_7$ | " | " | " | " | " | " | " | " | " |
| 197 | $4-C_2H_5$ | " | " | " | " | " | " | " | " | " |
| 198 | $4-NO_2$ | " | " | " | " | " | " | " | " | braun |
| 199 | $2-CF_3$ | " | " | " | " | " | " | " | " | gelbbraun |
| 200 | $2-CO-C_{10}H_{21}$ (C=O) | " | " | " | " | " | " | " | " | braun |
| 201 | $4-C(=O)-NH-CH_2-CH(C_2H_5)(C_4H_9)$ | " | " | " | " | " | " | " | " | " |
| 202 | " | " | " | " | " | " | " | $CH_2C_6H_5$ | " | " |
| 203 | $4-C(=O)-N(C_4H_9)_2$ | " | " | " | " | " | " | " | " | " |
| 204 | " | " | " | " | " | " | " | 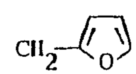 | " | " |
| 205 | $4-SO_2-CH_3$ | " | " | " | " | " | " | " | " | " |
| 206 | $4-SO_2-C_4H_9$ | " | " | " | " | " | " | " | " | " |
| 207 | $4-SO_2C_2H_5$ | " | " | " | " | " | " | " | " | " |
| 208 | $4-CO-CH_3$ | " | " | " | " | " | " | " | " | " |
| 209 | $4-CO_2-C_2H_5$ | " | " | " | " | " | " | " | " | " |

| Bsp. | $T^1$ | $T^2$ | $T^3$ | $T^4$ | $T^5$ | $T^6$ | $A^8$ | $A^9$ | Me | Farbton |
|---|---|---|---|---|---|---|---|---|---|---|
| 210 | $4-SO_2N(C_2H_5)$ | H | H | H | $4-OCH_3$ | H | H | 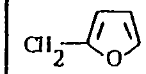 | Ni | braun |
| 211 | 4-N=N- 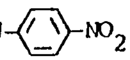 | H | H | " | " | " | " | " | " | dunkelbraun |
| 212 | 4-N=N- 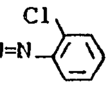 | $2-OCH_3$ | $5-CH_3$ | " | " | " | " | " | " | braunrot |
| 213 | " | " | " | " | " | " | " | $CH_2-C_6H_5$ | " | " |
| 214 | $4-\overset{O}{\overset{\parallel}{C}}-NH-C_3H_6OC_2H_4OC_6H_5$ | H | H | " | " | " | " | " | " | gelbbraun |
| 215 | " | " | " | " | " | " | " | 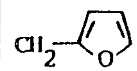 | " | " |
| 216 | $4-\overset{O}{\overset{\parallel}{C}}-N(C_2H_5)_2$ | " | " | " | " | " | " | " | " | " |
| 217 | $4-\overset{O}{\overset{\parallel}{C}}-N(CH_3)_2$ | " | " | " | " | " | " | " | " | " |
| 218 | $4-SO_2-N(CH_3)_2$ | " | " | " | " | " | " | " | " | " |
| 219 | 4-N=N- 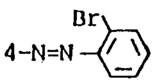 | $2-OCH_3$ | $5-CH_3$ | " | " | " | " | " | " | braunrot |
| 220 | $2-OCH_3$ | H | H | " | $5-NH-\overset{O}{\overset{\parallel}{C}}-CH_3$ | " | " | " | " | gelbbraun |
| 221 | " | " | " | " | $4-CH_3$ | " | " | " | " | " |
| 222 | H | " | " | " | " | " | " | " | " | " |
| 223 | $2-OCH_3$ | " | " | " | H | " | " | " | " | " |
| 224 | $2-CO_2CH_3$ | | " | " | $4-OCH_3$ | " | " | $CH_2CH(CH_3)_2$ | " | " |
| 225 | $2-OCH_3$ | 5-Cl | " | " | " | " | " | " | " | " |
| 226 | " | $4-OCH_3$ | 5-Cl | " | " | " | " | " | " | " |
| 227 | " | " | " | " | H | " | " | 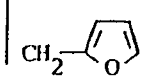 | " | " |

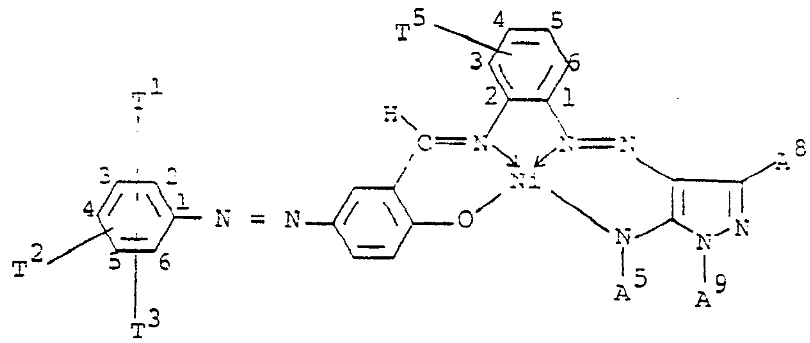

| Bsp. | $T^1$ | $T^2$ | $T^3$ | $T^5$ | $A^5$ | $A^8$ | $A^9$ | Farbton |
|---|---|---|---|---|---|---|---|---|
| 228 | H | H | H | 4-$OCH_3$ | $CH_3$ | H | 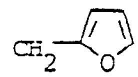 | gelbbraun |
| 229 | " | " | " | " | $C_2H_5$ | " | " | " |
| 230 | " | " | " | " | $C_4H_9$-(n) | " | " | " |
| 231 | " | " | " | " | $CH_2C_6H_5$ | " | " | " |
| 232 | " | " | " | " | $C_4H_9$-(n) | " | $CH_2C_6H_5$ | " |
| 233 | 2-$OCH_3$ | " | " | " | " | " | " | " |
| 234 | 4-N=N-$C_6H_5$ | " | " | " | " | " | " | " |
| 235 | " | " | " | " | " | $CH_3$ | $C_6H_5$ | " |
| 236 | H | " | " | " | " | " | " | " |

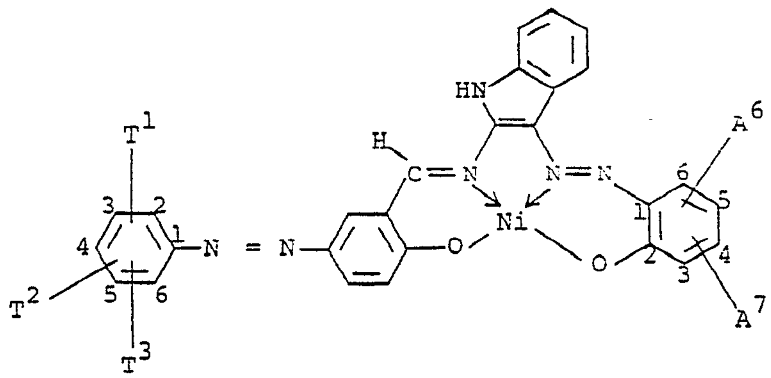

| Bsp. | $T^1$ | $T^2$ | $T^3$ | $A^6$ | $A^7$ | Farbton |
|---|---|---|---|---|---|---|
| 237 | H | H | H | H | H | blaugrau |
| 238 | 2-$OCH_3$ | " | " | " | " | " |
| 239 | H | " | " | 4-$NO_2$ | 5-Cl | " |
| 240 | " | " | " | " | " | " |

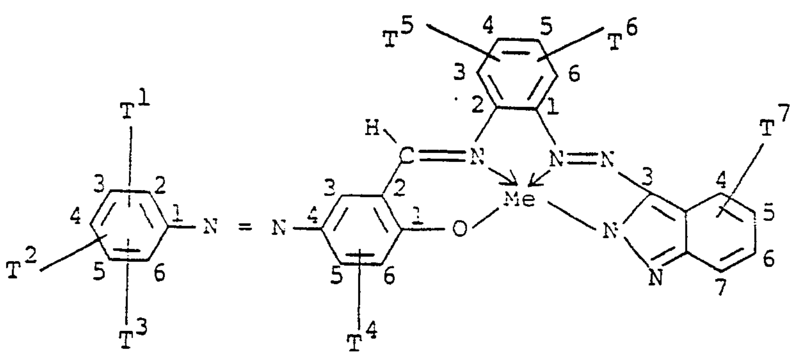

| Bsp. | $T^1$ | $T^2$ | $T^3$ | $T^4$ | $T^5$ | $T^6$ | $T^7$ | Me | Farbton |
|---|---|---|---|---|---|---|---|---|---|
| 241 | $4-N=N-C_6H_5$ | H | H | H | $4-OCH_3$ | $5-CH_3$ | H | Ni | braun |
| 242 | H | " | " | " | " | " | " | Co | grau |
| 243 | H | " | " | " | " | " | " | Cu | grau |
| 244 | 4-N=N- 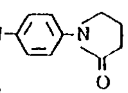 | $2-OCH_3$ | $5-OCH_3$ | " | " | " | " | Ni | grau |
| 245 | H | H | H | 6-Br | " | " | " | " | oliv |
| 246 | " | " | " | $6-OCH_3$ | " | " | " | " | " |
| 247 | " | " | " | H | $4-NH-COCH_3$ | " | " | " | " |
| 248 | " | " | " | " | $4-O-C_2H_5$ | " | " | " | " |
| 249 | " | " | " | " | $4-O-C_4H_9-(n)$ | " | " | " | " |
| 250 | " | " | " | " | $4-O-C_3H_7-(n)$ | " | " | " | " |
| 251 | " | " | " | " | $4-O-CH_2-C_6H_5$ | " | " | " | " |
| 252 | " | " | " | " | $4-OCH_3$ | H | " | " | " |
| 253 | " | " | " | " | " | Cl | " | " | " |
| 254 | $4-O-C_6H_5$ | " | " | " | " | $5-CH_3$ | " | " | braunoliv |
| 255 | H | " | " | " | " | " | 6-Cl | " | oliv |
| 256 | H | " | " | " | " | " | $5-NO_2$ | " | grau |
| 257 | 4-N=N- 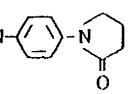 | $2-OCH_3$ | $5-CH_3$ | " | " | " | H | " | braunrubin |
| 258 | $2-CH_3$ | H | H | " | " | " | " | " | oliv |
| 259 | 4-N=N- 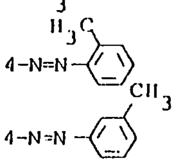 | $2-CH_3$ | " | " | " | " | " | " | grau |
| 260 | 4-N=N- | $3-CH_3$ | " | " | " | " | " | " | dunkelbraun |

| Bsp. | $T^1$ | $T^2$ | $T^3$ | $T^4$ | $T^5$ | $T^6$ | $T^7$ | Me | Farbton |
|---|---|---|---|---|---|---|---|---|---|
| 261 | 4-$C(CH_3)_3$ | H | H | H | 4-$OCH_3$ | 5-$CH_3$ | H | Ni | oliv |
| 262 | 2-$CO_2CH_3$ | " | " | " | " | " | " | " | " |
| 263 | 2-$OCH_3$ | 4-$OCH_3$ | -5-Cl | " | " | " | " | " | " |
| 264 | 2-$CH_3$ | 4-$CH_3$ | H | " | " | " | " | " | " |
| 265 | 2-$OCH_3$ | 5-Cl | " | " | " | " | " | " | " |
| 266 | 2-Cl | H | " | " | " | " | " | " | " |
| 267 | 2-$OCH_3$ | 5-$CH_3$ | " | " | " | " | " | " | " |
| 268 | " | 5-$OCH_3$ | " | " | " | " | " | " | " |
| 269 | H | H | " | " | 4-$OCH_3$ | 5-$OCH_3$ | " | " | " |
| 270 | " | " | " | " | 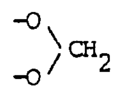 | | " | " | " |
| 271 | " | " | " | " | 4-$OCH_3$ | 5-$CH_3$ | " | Zn | braun |
| 272 | 2-Br | " | " | " | " | " | " | Ni | oliv |

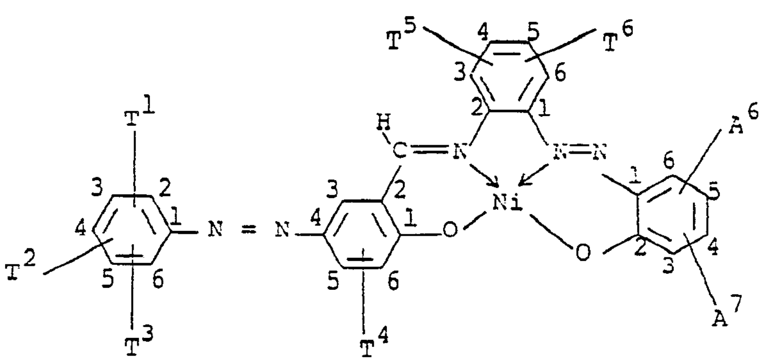

| Bsp. | $T^1$ | $T^2$ | $T^3$ | $T^4$ | $T^5$ | $T^6$ | $A^6$ | $A^7$ | Farbton |
|---|---|---|---|---|---|---|---|---|---|
| 273 | H | H | H | H | H | H | $4-N(C_2H_5)_2$ | H | braunrot |
| 274 | " | " | " | " | " | " | $3-CH_3$ | $5-CH_3$ | oliv |
| 275 | $4-N=N-C_6H_5$ | " | " | " | " | " | " | " | braun |
| 276 | H | " | " | " | $4-O-C_4H_9-(n)$ | " | H | H | oliv |
| 277 | $2-OCH_3$ | " | " | " | " | " | " | " | " |
| 278 | " | " | " | " | $4-OCH_3$ | " | " | " | " |
| 279 | H | " | " | " | H | " | 5,6- 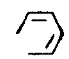 | | braunoliv |
| 280 | " | " | " | " | " | " | $5-CH_3$ | " | oliv |
| 281 | $2-OCH_3$ | " | " | " | " | " | " | " | " |
| 282 | H | " | " | $6-OCH_3$ | " | " | " | " | " |
| 283 | $2-OCH_3$ | $4-OCH_3$ | 5-Cl | H | " | " | " | " | " |
| 284 | H | H | H | " | " | " | " | " | " |
| 285 | $4-N=N-C_6H_5$ | " | " | " | " | " | " | " | braun |
| 286 | H | " | " | " | $5-OCH_3$ | " | " | " | oliv |
| 287 | " | " | " | " | 5-Cl | " | " | " | " |
| 288 | " | " | " | " | $4-N(CH_2-CH=CH_2)(CH_2-CH_2-CN)$ | $5-OCH_3$ | H | " | olivgrün |
| 289 | $4-O-C_6H_5$ | " | " | " | 4- 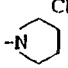 | H | " | " | olivgrün |
| 290 | H | " | " | " | $4-N(C_2H_5)_2$ | " | $4-NO_2$ | 5-Cl | grün |
| 291 | $4-O-C_2H_5$ | " | " | " | " | " | $5-CH_3$ | H | grün |
| 292 | " | " | " | " | " | " | H | " | grün |
| 293 | $4-OCH_3$ | " | " | " | " | " | " | " | grün |

| Bsp. | $T^1$ | $T^2$ | $T^3$ | $T^4$ | $T^5$ | $T^6$ | $A^6$ | $A^7$ | Farbton |
|---|---|---|---|---|---|---|---|---|---|
| 294 | 4-O-$C_6H_5$ | H | H | H | 4-N$(C_2H_5)_2$ | H | H | H | olivgrün |
| 295 | 4-N=N-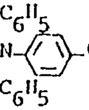-O-$C_6H_5$ | 2-$OCH_3$ | 5-$OCH_3$ | " | " | " | " | " | rotbraun |
| 296 | 4-O-$C_6H_5$ | H | H | " | " | " | 5-$NO_2$ | " | oliv |
| 297 | " | " | " | " | " | " | 5-Cl | " | olivgrün |
| 298 | " | " | " | " | " | " | 5-$SO_2N(CH_3)_2$ | " | " |
| 299 | " | " | " | " | " | " | 5-$CH_3$ | " | " |
| 300 | " | " | " | " | 4-NH-$C_2H_5$ | 5-$CH_3$ | H | " | " |
| 301 | 4-O-$C_2H_5$ | " | " | " | " | " | " | " | " |
| 302 | 2-$OCH_3$ | " | " | " | H | H | 3-$CH_3$ | 5-$CH_3$ | oliv |
| 303 | 2-Cl | " | " | " | " | " | " | " | " |
| 304 | 4-N=N-$C_6H_5$ | " | " | " | " | " | 5-$C_2H_5$ | " | braun |
| 305 | " | " | " | " | " | " | 5-$C(CH_3)_3$ | H | " |
| 306 | " | " | " | " | " | " | 5-$C_6H_5$ | " | " |
| 307 | " | " | " | " | " | " | 5-$OCH_3$ | " | " |
| 308 | " | " | " | " | " | " | 5-O-$C_6H_5$ | " | " |
| 309 | H | " | " | " | " | " | " | " | oliv |
| 310 | " | " | " | " | " | " | 5-$OCH_3$ | " | " |
| 311 | " | " | " | " | " | " | 5-$C_6H_5$ | " | " |
| 312 | " | " | " | " | " | " | 5-$C(CH_3)_2$ | " | " |
| 313 | " | " | " | " | " | " | 4-N$(C_2H_5)_2$ | " | bordo |
| 314 | " | " | " | " | " | " | 4-N$(CH_3)_2$ | " | " |
| 315 | 4-N=N-$C_6H_5$ | " | " | " | " | " | 4-N$(C_2H_5)_2$ | " | " |

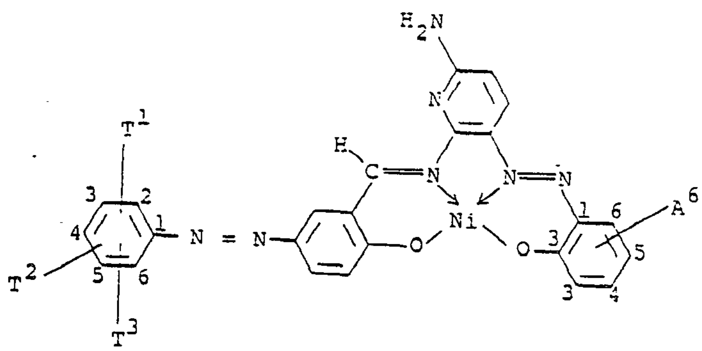

| Bsp. | $T^1$ | $T^2$ | $T^3$ | $A^6$ | Farbton |
|---|---|---|---|---|---|
| 316 | $4-O-C_6H_5$ | H | H | H | oliv |
| 317 | $4-N=N-C_6H_5$ | " | " | " | grau |
| 318 | $-OCH_3$ | " | " | " | oliv |

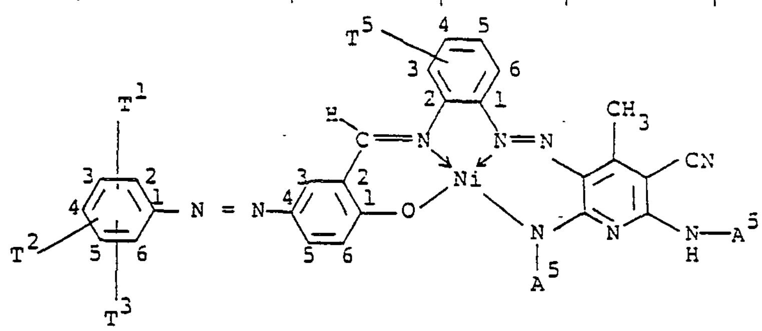

| Bsp. | $T^1$ | $T^2$ | $T^3$ | $T^5$ | $A^5$ | Farbton |
|---|---|---|---|---|---|---|
| 319 | H | H | H | H | $-(CH_2)_3OCH_3$ | braun |
| 320 | " | " | " | " | $-(CH_2)_2OCH_3$ | " |
| 321 | " | " | " | $5-OCH_3$ | $-(CH_2)_3OCH_3$ | " |
| 322 | " | " | " | 5-Cl | " | " |
| 323 | $4-N=N-C_6H_5$ | " | " | H | " | " |
| 324 | $2-OCH_3$ | $4-OCH_3$ | 5-Cl | " | " | " |
| 325 | $2-OCH_3$ | H | H | " | " | " |
| 326 | " | " | " | " | $-C_2H_5$ | " |
| 327 | " | " | " | " | $-C_4H_9-(n)$ | " |
| 328 | " | " | " | " | $-C_3H_7-(n)$ | " |

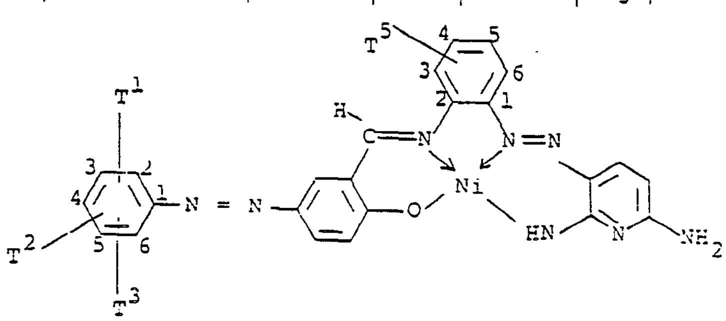

| Bsp. | $T^1$ | $T^2$ | $T^3$ | $T^5$ | Farbton |
|---|---|---|---|---|---|
| 329 | H | H | H | H | braun |
| 330 | $2-OCH_3$ | " | " | " | " |
| 331 | $4-N=N-C_6H_5$ | " | " | " | " |
| 332 | $2-OCH_3$ | " | " | $5-OCH_3$ | " |
| 333 | $2-OCH_3$ | $4-OCH_3$ | 5-Cl | H | " |

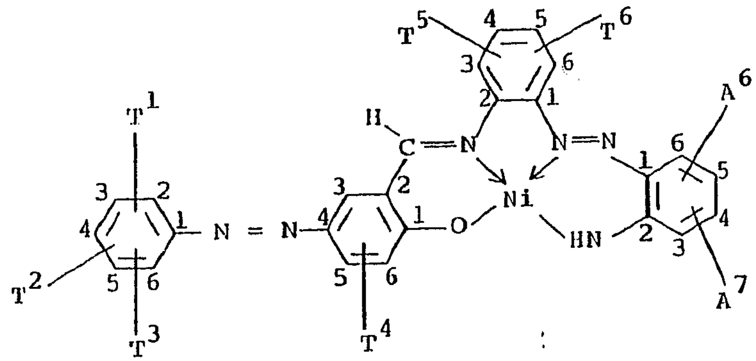

| Bsp. | $T^1$ | $T^2$ | $T^3$ | $T^4$ | $T^5$ | $T^6$ | $A^6$ | $A^7$ | Farbton |
|---|---|---|---|---|---|---|---|---|---|
| 334 | H | H | H | H | H | H | 5,6- | 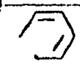 | oliv |
| 335 | $2-OCH_3$ | " | " | " | " | " | " | " | " |
| 336 | $4-N=N-C_6H_5$ | " | " | " | " | " | " | " | olivbraun |
| 337 | " | " | " | " | $4-OCH_3$ | $5-CH_3$ | H | H | braun |
| 338 | H | " | " | " | " | " | " | " | " |
| 339 | 4-N=N- 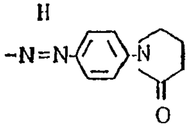 | $2-OCH_3$ | $5-CH_3$ | " | " | " | " | " | " |
| 340 | " | $2-OCH_3$ | $5-OCH_3$ | " | " | " | " | " | rotbraun |

**Patentansprüche**

1. Farbstoffverbindungen der allgemeinen Formel I

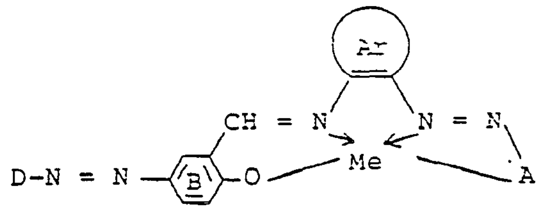

(I)

in der

A der Rest einer gegebenenfalls nach Umwandlung zur Komplexbildung befähigten Kupplungs- oder Diazokomponente,

Ar ein gegebenenfalls substituierter aromatischer oder heterocyclischer Rest,

D der Rest einer Diazokomponente und

Me ein $Co^{2+}$-, $Cu^{2+}$-, $Zn^{2+}$-, $Mn^{2+}$- oder $Ni^{2+}$-Atom sind und wobei der Ring B noch substituiert sein kann.

2. Verbindungen gemäß Anspruch 1 der Formel

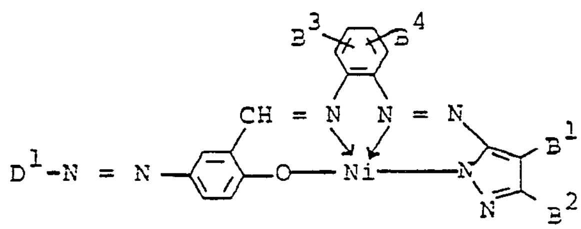

(Ia)

in der

$B^1$ Wasserstoff, Methyl oder Phenyl,

$B^1$ und $B^2$ zusammen die Ergänzung zu einem gegebenenfalls substituierten Benzring,

$B^3$ Methyl, Alkoxy oder Benzyloxy,

$B^4$ Wasserstoff, Methyl, Chlor oder Methoxy und

$D^1$ gegebenenfalls durch Chlor, Brom, Cyan, Trifluormethyl, $C_1$- bis $C_4$-Alkoxycarbonyl, Alkyl, Alkoxy, Phenoxy, substituiertes Alkoxy oder gegebenenfalls substituiertes Phenylazo substituiertes Phenyl sind.

3. Verbindungen gemäß Anspruch 2, wobei in der Formel

$B^1$ und $B^2$ die Ergänzung zu einem gegebenenfalls durch Methyl oder Chlor substituierten Benzring,

$B^3$ Methyl, $C_1$- bis $C_4$-Alkoxy oder Benzyloxy,

$B^3$ und $B^4$ zusammen der Rest der Formel $—O—CH_2—O—$,

$D^1$ gegebenenfalls durch Chlor, Brom, Cyan, Trifluormethyl, $C_1$- bis $C_4$-Alkoxycarbonyl, Methyl, Ethyl, Propyl, Butyl, $C_1$- bis $C_4$-Alkoxy, Phenoxy, Benzyloxy, Phenylazo oder durch Chlor, Brom, Methyl, Ethyl oder $C_1$- bis $C_4$-Alkoxy substituiertes Phenylazo substituiertes Phenyl sind und $B^1$ und $B^4$ die angegebene Bedeutung haben.

4. Verbindungen gemäß Anspruch 1 der Formel

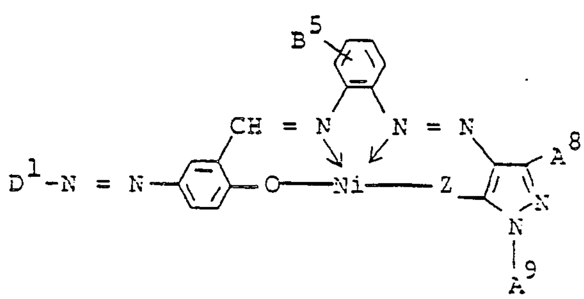

(Ib)

in der

$A^8$ Wasserstoff, Methyl, Phenyl oder $C_1$- bis $C_4$-Alkoxycarbonyl,

$A^9$ Wasserstoff oder gegebenenfalls substituiertes Alkyl, Cycloalkyl, Aralkyl, Heteroaralkyl oder Aryl,

$B^5$ Wasserstoff, Methyl, Ethyl, Methoxy, Ethoxy, Phenoxy, Acetylamino oder Chlor und

Z —O— oder —NH— sind und

$D^1$ die für Anspruch 2 angegebene Bedeutung hat.

5. Verbindungen gemäß Anspruch 4, wobei in der Formel

$D^1$ gegebenenfalls durch Chlor, Brom, Cyan, Trifluormethyl, $C_1$- bis $C_4$-Alkoxycarbonyl, Methyl, Ethyl, Propyl, Butyl, $C_1$- bis $C_4$-Alkoxy, Phenoxy, Benzyloxy, Phenylazo oder durch Chlor, Brom, Methyl, Ethyl oder $C_1$- bis $C_4$-Alkoxy substituiertes Phenylazo substituiertes Phenyl und

$A^9$ Wasserstoff, $C_1$- bis $C_6$-Alkyl, Cyclohexyl, Methylcyclohexyl, Benzyl, Furylmethyl oder gegebenenfalls durch Chlor, Brom, Methyl, Ethyl, Methoxy oder Ethoxy substituiertes Phenyl sind und $A^8$, $B^5$ und Z die für Anspruch 4 angegebene Bedeutung haben.

6. Verbindungen gemäß Anspruch 1 der Formel

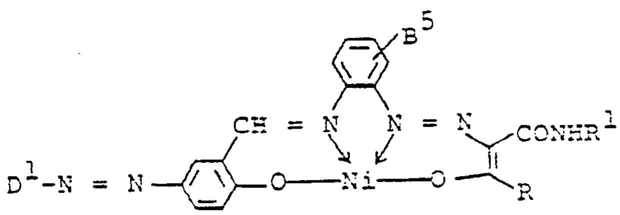

(Ic)

in der

R Methyl oder Phenyl und

$R^1$ gegebenenfalls durch $CH_3$, $C_2H_5$, $OCH_3$, $OC_2H_5$ oder Cl substituiertes Phenyl oder Naphthyl sind und

$B^5$ und

$D^1$ die angegebene Bedeutung haben.

7. Verbindungen gemäß Anspruch 6, wobei in der Formel

$D^1$ gegebenenfalls durch Chlor, Brom, Cyan, Trifluormethyl, $C_1$- bis $C_4$-Alkoxycarbonyl, Methyl, Ethyl, Propyl, Butyl, $C_1$- bis $C_4$-Alkoxy, Phenoxy, Benzyloxy, Phenylazo oder durch Chlor, Brom, Methyl, Ethyl oder $C_1$- bis $C_4$-Alkoxy substituiertes Phenylazo substituiertes Phenyl ist und

$B^5$, R und $R^1$ die für Anspruch 6 angegebene Bedeutung haben.

8. Verwendung der Verbindungen gemäß Anspruch 1 zum Färben von Cellulosefasern, Polyestern oder Mischgeweben aus Cellulosefasern und Polyestern.

## Claims

1. A dyestuff compound of the general formula I

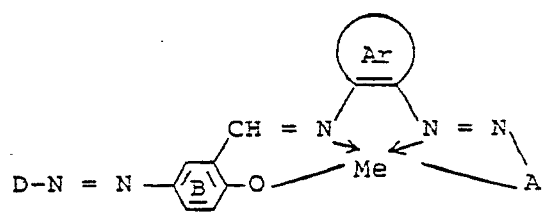

(I)

where

A is a radical of a coupling or diazo component which, if necessary after conversion, is capable of complex formation,

Ar is an unsubstituted or substituted aromatic or heterocyclic radical,

D is a radical of a diazo component, and

Me is a $Co^{2+}$, $Cu^{2+}$, $Zn^{2+}$, $Mn^{2+}$ or $Ni^{2+}$ ion, and the ring B can be further substituted.

2. A compound as claimed in claim 1, of the formula

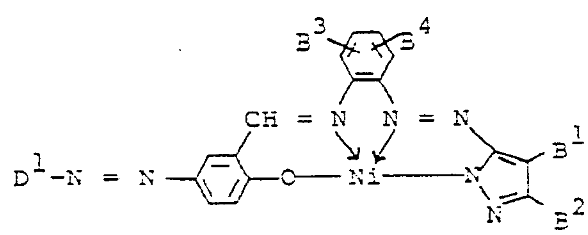

(Ia)

where

$B^1$ is hydrogen, methyl or phenyl,

$B^1$ and $B^2$ together complete an unsubstituted or substituted benzo ring.
$B^3$ is methyl, alkoxy or benzyloxy,
$B^4$ is hydrogen, methyl, chlorine or methoxy, and
$D^1$ is phenyl which is unsubstituted or substituted by chlorine, bromine, cyano, trifluoromethyl, $C_1$-$C_4$-alkoxycarbonyl, alkyl, alkoxy, phenoxy, substituted alkoxy or unsubstituted or substituted phenylazo.

3. A compound as claimed in claim 2, wherein, in the formula,
$B^1$ and $B^2$ complete a benzo ring which is unsubstituted or substituted by methyl or chlorine,
$B^3$ is methyl, $C_1$-$C_4$-alkoxy or benzyloxy,
$B^3$ and $B^4$ together form a radical of the formula $-O-CH_2-O-$,
$D^1$ is phenyl which is unsubstituted or substituted by chlorine, bromine, cyano, trifluoromethyl, $C_1$-$C_4$-alkoxycarbonyl, methyl, ethyl, propyl, butyl, $C_1$-$C_4$-alkoxy, phenoxy or benzyloxy, or by phenylazo which is unsubstituted or substituted by chlorine, bromine, methyl, ethyl or $C_1$-$C_4$-alkoxy, and $B^1$ and $B^4$ have the stated meanings.

4. A compound as claimed in claim 1, of the formula

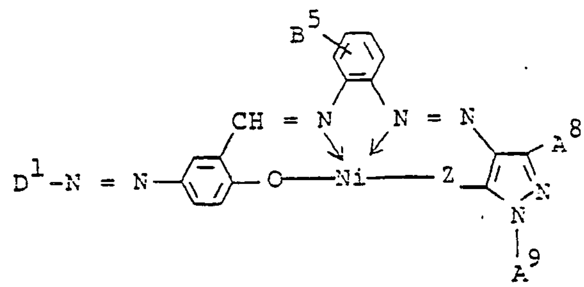

(Ib)

where
$A^8$ is hydrogen, methyl, phenyl or $C_1$-$C_4$-alkoxycarbonyl,
$A^9$ is hydrogen or unsubstituted or substituted alkyl, cycloalkyl, aralkyl, heteroaralkyl or aryl,
$B^5$ is hydrogen, methyl, ethyl, methoxy, ethoxy, phenoxy, acetylamino or chlorine,
Z is $-O-$ or $-NH-$, and
$D^1$ has the meanings given in claim 2.

5. A compound as claimed in claim 4, wherein, in the formula,
$D^1$ is phenyl which is unsubstituted or substituted by chlorine, bromine, cyano, trifluoromethyl, $C_1$-$C_4$-alkoxycarbonyl, methyl, ethyl, propyl, butyl, $C_1$-$C_4$-alkoxy, phenoxy or benzyloxy, or by phenylazo which is unsubstituted or substituted by chlorine, bromine, methyl, ethyl or $C_1$-$C_4$-alkoxy,
$A^9$ is hydrogen, $C_1$-$C_6$-alkyl, cyclohexyl, methylcyclohexyl, benzyl, furylmethyl or phenyl which is unsubstituted or substituted by chlorine, bromine, methyl, ethyl, methoxy or ethoxy, and $A^8$, $B^5$ and Z have the meanings given in claim 4.

6. A compound as claimed in claim 1, of the formula

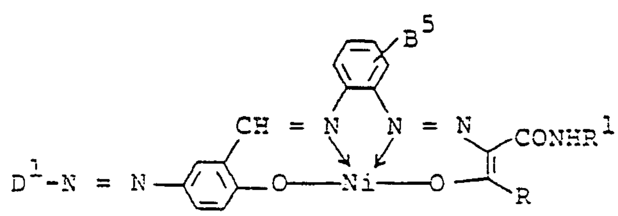

(Ic)

where
R is methyl or phenyl,
$R^1$ is naphthyl or phenyl which is unsubstituted or substituted by $CH_3$, $C_2H_5$, $OCH_3$, $OC_2H_5$ or Cl, and $B^5$ and
$D^1$ have the stated meanings.

7. A compound as claimed in claim 6, wherein, in the formula,
$D^1$ is phenyl which is unsubstituted or substituted by chlorine, bromine, cyano, trifluoromethyl, $C_1$-$C_4$-alkoxycarbonyl, methyl, ethyl, propyl, butyl, $C_1$-$C_4$-alkoxy, phenoxy or benzyloxy, or by phenylazo which is unsubstituted or substituted by chlorine, bromine, methyl, ethyl or $C_1$-$C_4$-alkoxy, and
$B^5$, R and $R^1$ have the meanings given in claim 6.

8. The use of a compound as claimed in claim 1 for dyeing cellulosic fibers, polyesters or fabric blends of cellulosic fibers and polyesters.

**Revendications**

1. Composés colorants de formule générale I

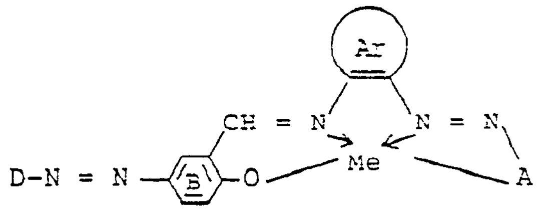

(I)

dans laquelle

A est le radical d'un composant de copulation ou de diazoïque capable de complexation, éventuellement après transformation,

Ar est un radical aromatique ou hétérocyclique éventuellement substitué,

D est le radical d'un composant de diazoïque et

Me est un atome de $Co^{2+}$, $Cu^{2+}$, $Zn^{2+}$, $Mn^{2+}$ ou $Ni^{2+}$, le noyau B pouvant être encore substitué.

2. Composés selon la revendication 1 de formule

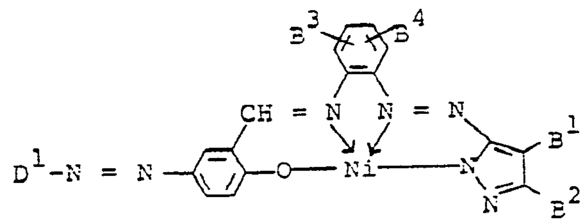

(Ia)

dans laquelle

$B^1$ est un atome d'hydrogène, un radical méthyle ou phényle,

$B^1$ et $B^2$ forment ensemble le complément d'un noyau benzénique éventuellement substitué,

$B^3$ est un radical méthyle, alcoxy ou benzyloxy,

$B^4$ est un atome d'hydrogène, de chlore, un radical méthyle ou méthoxy et

$D^1$ est un radical phényle substitué par un atome de chlore, de brome, un groupement cyano, trifluorométhyle, $C_1$-$C_4$-alcoxycarbonyle, alkyle, alcoxy, phénoxy, alcoxy substitué ou phénylazo éventuellement substitué.

3. Composés selon la revendication 2, dans la formule desquels

$B^1$ et $B^2$ forment ensemble le complément d'un noyau benzénique éventuellement substitué par un radical méthyl ou un atome de chlore.

$B^3$ est un radical méthyle, alcoxy en $C_1$ à $C_4$ ou benzyloxy,

$B^3$ et $B^4$ forment ensemble le radical de formule $-O-CH_2-O-$,

$D^1$ est un radical phényle éventuellement substitué par un atome de chlore, de brome, un groupement cyano, trifluorométhyle, $C_1$-$C_4$-alcoxycarbonyle, méthyle, éthyle, propyle, butyle, alcoxy en $C_1$ à $C_4$, phénoxy, benzyloxy ou phénylazo substitué par un atome de chlore, de brome, un radical méthyle, éthyle ou alcoxy en $C_1$ à $C_4$, et $B^1$ et $B^4$ ont les significations déjà indiquées.

4. Composés selon la revendication 1 de formule

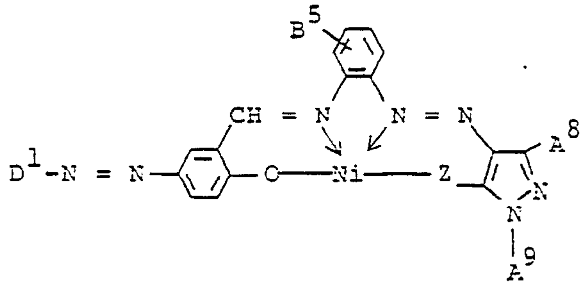

(Ib)

dans laquelle

$A^8$ est un atome d'hydrogène, un radical méthyle, phényle ou $C_1$-$C_4$-alcoxycarbonyle,

$A^9$ est un atome d'hydrogène ou un radical éventuellement substitué alkyle, cycloalkyle, aralkyle, hétéroaralkyle ou aryle,

$B^5$ est un atome d'hydrogène ou de chlore ou un radical méthyle, éthyle, méthoxy, éthoxy, phénoxy, acétylamino,

Z est mis pour $-O-$ ou $-NH-$ et

$D^1$ a la signification donnée dans la revendication 1.

5. Composés selon la revendication 4, dans la formule desquels

$D^1$ est un radical phényle éventuellement substitué par un atome de chlore, de brome, un groupement cyano, trifluorométhyle, $C_1$-$C_4$-alcoxycarbonyle, méthyle, éthyle, propyle, butyle, alcoxy en $C_1$ à $C_4$, phénoxy, benzyloxy ou phénylazo substitué par un atome de chlore, de brome, un radical méthyle, éthyle ou alcoxy en $C_1$ à $C_4$ et

$A^9$ est un atome d'hydrogène, un radical alkyle en $C_1$ à $C_6$, cyclohexyle, méthylcyclohexyle, benzyle, furylméthyle ou phényle éventuellement substitué par un atome de chlore, de brome, un radical méthyle, éthyle, méthoxy ou éthoxy et $A^8$, $B^5$ et Z ont les significations données dans la revendication 4.

6. Composés selon la revendication 1 de formule

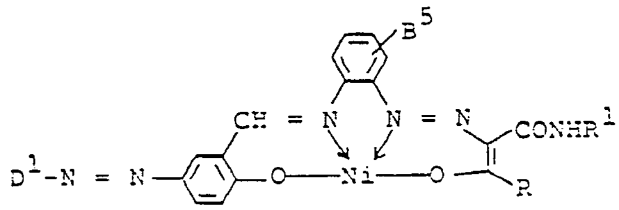

(Ic)

dans laquelle

R est un radical méthyle ou phényle,

$R^1$ est un radical phényle ou naphtyle éventuellement substitué par $CH_3$, $C_2H_5$, $OCH_3$, $OC_2H_5$ ou Cl et

$B^5$ et

$D^1$ ont les significations déjà indiquées.

7. Composés selon la revendication 6, dans la formule desquels

$D^1$ est un radical phényle éventuellement substitué par un atome de chlore, de brome, un groupement cyano, trifluorométhyle, $C_1$-$C_4$-alcoxycarbonyle, méthyle, éthyle, propyle, butyle, alcoxy en $C_1$ à $C_4$, phénoxy, benzyloxy ou phénylazo substitué par un atome de chlore, de brome, un radical méthyle, éthyle ou alcoxy en $C_1$ à $C_4$ et

$B^5$, R et $R^1$ ont les significations données dans la revendication 6.

8. Utilisation des composés selon la revendication 1 pour la teinture de fibres cellulosiques, de polyesters ou de tissus mixtes de fibres cellulosiques et de polyesters.